# EUROPEAN PATENT APPLICATION

(11) **EP 4 827 014 A1**
(43) Date of publication of application: **21.10.2026**
(21) Application number: 24918204.9
(22) Date of filing: 14.11.2024
(51) Int. Cl.: H04B 10/079

(54) **OPTICAL FIBER LINK TESTING METHOD AND APPARATUS, AND OPTICAL FIBER COMMUNICATION SYSTEM**

(30) Priority: 16.01.2024 CN 202410065114
(71) Applicant: Huawei Technologies Co., Ltd., Shenzhen, Guangdong 518129 (CN)
(72) Inventor: ZHANG, Sen, Shenzhen, Guangdong 518129 (CN); ZUO, Tianjian, Shenzhen, Guangdong 518129 (CN); XIANG, Qian, Shenzhen, Guangdong 518129 (CN)
(74) Representative: Huawei European IPR
(86) International application number: PCT/CN2024/132000
(87) International publication number: WO 2025/152595

(57) **Abstract**

A method and an apparatus for detecting an optical fiber link, and an optical fiber communication system are provided, pertaining to the field of communication technologies. An optical sending device generates a first optical signal that carries a detection sequence and sends the first optical signal over an optical fiber link. The first optical signal, through transmission over the optical fiber link, forms a second optical signal, which includes the first optical signal and a reflected optical signal. An optical receiving device receives the second optical signal over the optical fiber link, demodulates the second optical signal to obtain the detection sequence, and determines, based on the detection sequence obtained through demodulation, the transmission performance of the optical fiber link. This application leverages the existing optical sending device and optical receiving device in the optical fiber communication system to detect the transmission performance of the optical fiber link, eliminating the need for additional devices. Therefore, hardware implementation for optical fiber link detection is simplified and detection costs are reduced.

## Description

This application claims priority to Chinese Patent Application No. 202410065114.8, filed on January 16, 2024, and entitled "METHOD AND APPARATUS FOR DETECTING OPTICAL FIBER LINK, AND OPTICAL FIBER COMMUNICATION SYSTEM", which is incorporated herein by reference in its entirety.

### TECHNICAL FIELD

This application relates to the field of communication technologies, and in particular, to a method and an apparatus for detecting an optical fiber link, and an optical fiber communication system.

### BACKGROUND

An optical fiber communication system usually includes an optical sending device, an optical receiving device, and an optical fiber link. The optical sending device is connected to the optical receiving device over the optical fiber link. The optical sending device obtains an optical signal with to-be-transmitted information through modulation and sends the optical signal to the optical receiving device over the optical fiber link. The optical receiving device receives the optical signal over the optical fiber link and obtains, through demodulation, the information carried in the optical signal. Exceptions in the optical fiber link may cause multi-path interference (multi-path interference, MPI) noise, mode partition noise (mode partition noise, MPN), and other impairments, leading to deterioration of the signal-to-noise ratio of the optical signal received by the optical receiving device. Therefore, it is necessary to detect the transmission performance of the optical fiber link.

Currently, the transmission performance of the optical fiber link is usually detected by using an optical time domain reflectometer (optical time domain reflectometer, OTDR). For example, an OTDR may be deployed on the optical fiber link, and controlled to send optical signals to the optical fiber link and then detect reflected signals. The transmission performance of the optical fiber link is determined based on the reflected signals detected by the OTDR.

However, detection of optical fiber links requires additional OTDR devices, complicating hardware implementation and increasing detection costs.

### SUMMARY

This application provides a method and an apparatus for detecting an optical fiber link, and an optical fiber communication system. This application simplifies hardware implementation for optical fiber link detection and reduces detection costs. The solutions in this application are as follows.

According to a first aspect, a method for detecting an optical fiber link is provided, and is applied to an optical sending device, where the method includes: generating a first optical signal, where the first optical signal carries a detection sequence, and the detection sequence is used by an optical receiving device to detect transmission performance of the optical fiber link; and sending the first optical signal over the optical fiber link, where the first optical signal, through transmission over the optical fiber link between the optical sending device and the optical receiving device, forms a second optical signal, and the second optical signal includes the first optical signal and a reflected optical signal. The reflected optical signal is an optical signal generated by reflecting the first optical signal on the optical fiber link. For example, the reflected optical signal is an optical signal generated by reflecting the first optical signal a plurality of times (for example, an even number of times) between reflection points on the optical fiber link, and the reflection points include a connector, an end face of a laser of the optical sending device, and the like. Strength of the reflected optical signal depends on reflection strength of the reflection points.

Because the second optical signal includes the first optical signal, and the first optical signal carries the detection sequence, the second optical signal carries the detection sequence.

According to the technical solution provided in this application, the optical fiber link can be detected without deploying an additional device like an OTDR on the optical fiber link, thereby simplifying hardware implementation and reducing detection costs.

Optionally, an autocorrelation curve corresponding to the detection sequence satisfies a preset condition.

Optionally, that the autocorrelation curve corresponding to the detection sequence satisfies the preset condition includes: The autocorrelation curve corresponding to the detection sequence has one characteristic peak. For example, the autocorrelation curve corresponding to the detection sequence has only one characteristic peak.

According to the technical solution provided in this application, because the autocorrelation curve corresponding to the detection sequence carried in the first optical signal has one characteristic peak, and the second optical signal includes the first optical signal, the second optical signal carries the detection sequence, and the autocorrelation curve corresponding to the detection sequence carried in the second optical signal has one characteristic peak. In this way, the optical receiving device can determine the transmission performance of the optical fiber link based on the characteristic peak on the autocorrelation curve corresponding to the detection sequence obtained by demodulating the received second optical signal.

Optionally, the detection sequence includes a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence. That is, the autocorrelation curve corresponding to the detection sequence is a superposition curve of the autocorrelation curve of the first sequence and the autocorrelation curve of the second sequence.

Optionally, the first optical signal carries a plurality of detection sequences, and the plurality of detection sequences are periodically distributed; and there is a boundary marker between adjacent detection sequences in the plurality of detection sequences; or adjacent detection sequences in the plurality of detection sequences are contiguous.

According to the technical solution provided in this application, the first optical signal carries the plurality of periodically distributed detection sequences (correspondingly, the second optical signal also carries the plurality of periodically distributed detection sequences), so that the optical receiving device obtains the detection sequence by demodulating the second optical signal, to further determine, based on the detection sequence obtained through demodulation, the transmission performance of the optical fiber link. For example, if the first optical signal carries only one detection sequence (correspondingly, the second optical signal also carries only one detection sequence), the optical receiving device can determine the transmission performance of the optical fiber link based on the detection sequence only by obtaining the detection sequence through accurate demodulation. If the first optical signal carries the plurality of detection sequences (correspondingly, the second optical signal also carries the plurality of detection sequences), provided that the optical receiving device can obtain one of the plurality of detection sequences through demodulation, the optical receiving device can determine the transmission performance of the optical fiber link based on the detection sequence, thereby reducing difficulty in obtaining the detection sequence by demodulating the second optical signal by the optical receiving device.

In addition, when there is the boundary marker between the adjacent detection sequences in the plurality of detection sequences, the optical receiving device may identify, based on the boundary marker, the detection sequences carried in the second optical signal, thereby reducing difficulty in identifying, by the optical receiving device, the detection sequences carried in the second optical signal.

Optionally, the detection sequence includes either of the following: a pseudo random binary sequence and a Golay complementary sequence.

Optionally, the first optical signal further carries a data signal. That is, the first optical signal carries the detection sequence and the data signal.

According to the technical solution provided in this application, the data signal and the detection sequence for detecting the transmission performance of the optical fiber link are carried in a same optical signal, to implement in-line detection of the transmission performance of the optical fiber link.

Optionally, in the first optical signal, a modulation depth of the detection sequence is less than a modulation depth of the data signal, and a baud rate of the detection sequence is less than a baud rate of the data signal.

According to the technical solution provided in this application, for the data signal, the detection sequence belongs to noise. Therefore, the modulation depth of the detection sequence is set to be less than the modulation depth of the data signal, and the baud rate of the detection sequence is set to be less than the baud rate of the data signal. In this way, while in-line detection of the transmission performance of the optical fiber link is implemented, it can be avoided that the detection sequence affects the data signal.

Optionally, in the first optical signal, a ratio of the modulation depth of the detection sequence to the modulation depth of the data signal is less than a preset ratio; and a difference between the baud rate of the detection sequence and the baud rate of the data signal is within a preset range.

According to the technical solution provided in this application, because the difference between the baud rate of the detection sequence and the baud rate of the data signal is within the preset range, the baud rate of the detection sequence is less than the baud rate of the data signal, but the baud rate of the detection sequence is not quite low. In this way, while it is avoided that the detection sequence affects the data signal, it can be avoided that the baud rate of the detection sequence is too small to detect the optical fiber link.

Optionally, the generating the first optical signal includes: modulating, by using the detection sequence, a drive signal of a light source, to cause the light source to emit the first optical signal. That is, the first optical signal with the detection sequence is obtained through modulation in a direct modulation scheme. The direct modulation scheme is also referred to as an internal modulation scheme.

Optionally, the generating the first optical signal includes: modulating, by using the detection sequence, an optical signal emitted by a light source, to obtain the first optical signal. That is, the first optical signal with the detection sequence is obtained through modulation in an external modulation scheme.

Optionally, the generating the first optical signal includes: modulating, by using a data signal modulated with the detection sequence, a drive signal of a light source, to cause the light source to emit the first optical signal. That is, the first optical signal with the detection sequence and the data signal is obtained through modulation in a direct modulation scheme.

Optionally, the method is performed by the optical sending device, an optical module in the optical sending device, or an optical line card in the optical sending device.

According to a second aspect, a method for detecting an optical fiber link is provided, and is applied to an optical receiving device, where the method includes: receiving a second optical signal over the optical fiber link, where the second optical signal includes a first optical signal and a reflected optical signal, the first optical signal is an optical signal generated by an optical sending device, and the first optical signal carries a detection sequence; demodulating the second optical signal to obtain the detection sequence; and determining, based on the detection sequence obtained through demodulation, transmission performance of the optical fiber link. The reflected optical signal is an optical signal generated by reflecting the first optical signal on the optical fiber link. For example, the reflected optical signal is an optical signal generated by reflecting the first optical signal a plurality of times (for example, an even number of times) between reflection points on the optical fiber link, and the reflection points include a connector, an end face of a laser of the optical sending device, and the like. Strength of the reflected optical signal depends on reflection strength of the reflection points.

Because the second optical signal includes the first optical signal, and the first optical signal carries the detection sequence, the second optical signal carries the detection sequence.

According to the technical solution provided in this application, the optical sending device and the optical receiving device are leveraged to detect the transmission performance of the optical fiber link, eliminating the need for additional devices like OTDRs, thereby simplifying hardware implementation and reducing detection costs.

Optionally, an autocorrelation curve corresponding to the detection sequence satisfies a preset condition.

Optionally, that the autocorrelation curve corresponding to the detection sequence satisfies the preset condition includes: The autocorrelation curve corresponding to the detection sequence has one characteristic peak. For example, the autocorrelation curve corresponding to the detection sequence has only one characteristic peak.

Optionally, the detection sequence includes a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence. That is, the autocorrelation curve corresponding to the detection sequence is a superposition curve of the autocorrelation curve of the first sequence and the autocorrelation curve of the second sequence.

Optionally, the first optical signal carries a plurality of detection sequences, and the plurality of detection sequences are periodically distributed; and there is a boundary marker between adjacent detection sequences in the plurality of detection sequences; or adjacent detection sequences in the plurality of detection sequences are contiguous.

According to the technical solution provided in this application, the first optical signal carries the plurality of periodically distributed detection sequences (correspondingly, the second optical signal also carries the plurality of periodically distributed detection sequences), so that the optical receiving device obtains the detection sequence by demodulating the second optical signal, to further determine, based on the detection sequence obtained through demodulation, the transmission performance of the optical fiber link. For example, if the first optical signal carries only one detection sequence (correspondingly, the second optical signal also carries only one detection sequence), the optical receiving device can determine the transmission performance of the optical fiber link based on the detection sequence only by obtaining the detection sequence through accurate demodulation. If the first optical signal carries the plurality of detection sequences (correspondingly, the second optical signal also carries the plurality of detection sequences), provided that the optical receiving device can obtain one of the plurality of detection sequences through demodulation, the optical receiving device can determine the transmission performance of the optical fiber link based on the detection sequence, thereby reducing difficulty in obtaining the detection sequence by demodulating the first optical signal by the optical receiving device.

Optionally, the first optical signal carries a plurality of detection sequences, and there is a boundary marker between adjacent detection sequences in the plurality of detection sequences; and the demodulating the first optical signal to obtain the detection sequence includes: determining, based on the boundary marker carried in the second optical signal, the plurality of detection sequences carried in the second optical signal.

According to the technical solution provided in this application, there is the boundary marker between the adjacent detection sequences in the plurality of detection sequences, and the optical receiving device identifies, based on the boundary marker, the detection sequence carried in the second optical signal, thereby reducing difficulty in identifying, by the optical receiving device, the detection sequence carried in the second optical signal.

Optionally, the first optical signal carries a plurality of detection sequences, and adjacent detection sequences in the plurality of detection sequences are contiguous; and the demodulating the second optical signal to obtain the detection sequence includes: determining, based on a characteristic of the detection sequence, the plurality of detection sequences carried in the second optical signal.

According to the technical solution provided in this application, the optical receiving device determines, based on the characteristic of the detection sequence, the detection sequences carried in the second optical signal, so that the optical receiving device determines the transmission performance of the optical fiber link based on the detection sequences carried in the second optical signal.

Optionally, the determining, based on the detection sequence obtained through demodulation, the transmission performance of the optical fiber link includes: obtaining a correlation curve corresponding to the detection sequence obtained through demodulation, where the correlation curve is an autocorrelation curve or a cross-correlation curve, and the cross-correlation curve is determined based on the detection sequence obtained through demodulation and the pre-obtained detection sequence; and determining the transmission performance of the optical fiber link based on a characteristic peak on the correlation curve corresponding to the detection sequence obtained through demodulation.

According to the technical solution provided in this application, the cross-correlation curve determined based on the detection sequence obtained through demodulation and the pre-obtained detection sequence may also be considered as the autocorrelation curve of the detection sequence. Because the autocorrelation curve corresponding to the detection sequence carried in the first optical signal has one characteristic peak, the optical receiving device may determine the transmission performance of the optical fiber link based on the characteristic peak on the autocorrelation curve or the cross-correlation curve corresponding to the detection sequence obtained by demodulating the second optical signal.

Optionally, the determining the transmission performance of the optical fiber link based on the characteristic peak on the correlation curve corresponding to the detection sequence obtained through demodulation includes: when the correlation curve corresponding to the detection sequence obtained through demodulation has only one characteristic peak, determining that the optical fiber link is not faulty; or when the correlation curve corresponding to the detection sequence obtained through demodulation has a plurality of characteristic peaks, determining that the optical fiber link is faulty.

According to the technical solution provided in this application, the correlation curve corresponding to the detection sequence obtained through demodulation is an autocorrelation curve or a cross-correlation curve. The cross-correlation curve is determined based on the detection sequence obtained through demodulation and the pre-obtained detection sequence. The cross-correlation curve may also be considered as the autocorrelation curve of the detection sequence. Because the autocorrelation curve corresponding to the detection sequence carried in the first optical signal that is obtained through modulation by the optical sending device has one characteristic peak, when the correlation curve (the autocorrelation curve or the cross-correlation curve) corresponding to the detection sequence obtained by demodulating the second optical signal by the optical receiving device has the plurality of characteristic peaks, it may be considered that some of the characteristic peaks are caused by noise caused by a plurality of reflections of the first optical signal on the optical fiber link. In addition, an optical signal may usually be reflected on a fault point on the optical fiber link. Therefore, when the correlation curve corresponding to the detection sequence obtained by demodulating the second optical signal has the plurality of characteristic peaks, the optical receiving device determines that the optical fiber link is faulty. When the correlation curve corresponding to the detection sequence obtained by demodulating the second optical signal has only one characteristic peak, the optical receiving device determines that the optical fiber link is not faulty.

Optionally, the determining the transmission performance of the optical fiber link based on the characteristic peak on the correlation curve corresponding to the detection sequence obtained through demodulation further includes: when the correlation curve corresponding to the detection sequence obtained through demodulation has the plurality of characteristic peaks, determining a fault point on the optical fiber link based on a main peak and a secondary peak among the plurality of characteristic peaks. The plurality of characteristic peaks include one main peak and at least one secondary peak, and a peak value of the at least one secondary peak is less than a peak value of the main peak.

According to the technical solution provided in this application, when the correlation curve corresponding to the detection sequence obtained by demodulating the second optical signal has the plurality of characteristic peaks, the optical receiving device determines the fault point on the optical fiber link based on the main peak and the secondary peak among the plurality of characteristic peaks, thereby implementing fault diagnosis. Therefore, in this application, during fault diagnosis, it is unnecessary for a staff member to carry an instrument to a site for diagnosis, thereby simplifying an implementation process, and reducing detection labor costs.

Optionally, the detection sequence includes either of the following: a pseudo random binary sequence and a Golay complementary sequence.

Optionally, the first optical signal further carries a data signal. That is, the first optical signal carries the detection sequence and the data signal.

According to the technical solution provided in this application, the data signal and the detection sequence for detecting the transmission performance of the optical fiber link are carried in a same optical signal, to implement in-line detection of the transmission performance of the optical fiber link.

Optionally, in the first optical signal, a modulation depth of the detection sequence is less than a modulation depth of the data signal, and a baud rate of the detection sequence is less than a baud rate of the data signal.

According to the technical solution provided in this application, the modulation depth of the detection sequence is set to be less than the modulation depth of the data signal, and the baud rate of the detection sequence is set to be less than the baud rate of the data signal. While in-line detection of the transmission performance of the optical fiber link is implemented, it can be avoided that the detection sequence affects the data signal.

Optionally, in the first optical signal, a ratio of the modulation depth of the detection sequence to the modulation depth of the data signal is less than a preset ratio; and a difference between the baud rate of the detection sequence and the baud rate of the data signal is within a preset range.

According to the technical solution provided in this application, because the difference between the baud rate of the detection sequence and the baud rate of the data signal is within the preset range, the baud rate of the detection sequence is less than the baud rate of the data signal, but the baud rate of the detection sequence is not quite low. In this way, while it is avoided that the detection sequence affects the data signal, it can be avoided that the baud rate of the detection sequence is too small to detect the optical fiber link.

Optionally, the demodulating the second optical signal includes: filtering the second optical signal.

That is, the second optical signal is filtered to separate the detection sequence and the data signal that are carried in the second optical signal.

Optionally, the method is performed by the optical receiving device, an optical module in the optical receiving device, or an optical line card in the optical receiving device.

According to a third aspect, an apparatus for detecting an optical fiber link is provided, and includes at least one functional module. The at least one functional module is configured to perform the method according to the first aspect or any optional manner of the first aspect. The at least one functional module may be implemented based on software, hardware, or a combination of software and hardware, and the at least one functional module may be arbitrarily combined or divided based on specific implementation.

Optionally, the detection apparatus is an optical sending device, an optical module in the optical sending device, or an optical line card in the optical sending device, or the detection apparatus is integrated into an optical sending device, an optical module in the optical sending device, or an optical line card in the optical sending device.

According to a fourth aspect, an apparatus for detecting an optical fiber link is provided, and includes at least one functional module. The at least one functional module is configured to perform the method according to the second aspect or any optional manner of the second aspect. The at least one functional module may be implemented based on software, hardware, or a combination of software and hardware, and the at least one functional module may be arbitrarily combined or divided based on specific implementation.

Optionally, the detection apparatus is an optical receiving device, an optical module in the optical receiving device, or an optical line card in the optical receiving device, or the detection apparatus is integrated into an optical receiving device, an optical module in the optical receiving device, or an optical line card in the optical receiving device.

According to a fifth aspect, an apparatus for detecting an optical fiber link is provided, and includes a memory and a processor. The memory is configured to store a computer program. The processor is configured to execute the computer program stored in the memory, so that the apparatus for detecting the optical fiber link performs the method according to the first aspect or any optional manner of the first aspect.

Optionally, the detection apparatus is an optical sending device, an optical module in the optical sending device, or an optical line card in the optical sending device, or the detection apparatus is integrated into an optical sending device, an optical module in the optical sending device, or an optical line card in the optical sending device.

According to a sixth aspect, an apparatus for detecting an optical fiber link is provided, and includes a memory and a processor. The memory is configured to store a computer program. The processor is configured to execute the computer program stored in the memory, so that the apparatus for detecting the optical fiber link performs the method according to the second aspect or any optional manner of the second aspect.

Optionally, the detection apparatus is an optical receiving device, an optical module in the optical receiving device, or an optical line card in the optical receiving device, or the detection apparatus is integrated into an optical receiving device, an optical module in the optical receiving device, or an optical line card in the optical receiving device.

According to a seventh aspect, an apparatus for detecting an optical fiber link is provided, and includes a main control board and an interface board. The main control board and the interface board are configured to implement the method according to the first aspect or any optional manner of the first aspect.

According to an eighth aspect, an apparatus for detecting an optical fiber link is provided, and includes a main control board and an interface board. The main control board and the interface board are configured to implement the method according to the second aspect or any optional manner of the second aspect.

According to a ninth aspect, an apparatus for detecting an optical fiber link is provided, and includes a processor and an optical component. The optical component is configured to perform receiving and sending operations in the method according to the first aspect or any optional manner of the first aspect. The processor is configured to perform an operation in the method according to the first aspect or any optional manner of the first aspect other than the receiving and sending operations.

According to a tenth aspect, an apparatus for detecting an optical fiber link is provided, and includes a processor and an optical component. The optical component is configured to perform receiving and sending operations in the method according to the second aspect or any optional manner of the second aspect. The processor is configured to perform an operation in the method according to the second aspect or any optional manner of the second aspect other than the receiving and sending operations.

Optionally, in the ninth aspect and the tenth aspect, the processor includes an optical digital signal processor (optical digital signal processor, ODSP), and the optical component includes at least one of an optical transmitter or an optical receiver.

Optionally, in the ninth aspect and the tenth aspect, the detection apparatus is an optical module or an optical line card.

According to an eleventh aspect, an optical fiber communication system is provided, and includes an optical sending device, an optical receiving device, and an optical fiber link. The optical sending device is connected to the optical receiving device over the optical fiber link. The optical sending device includes the apparatus for detecting the optical fiber link according to the third aspect, the fifth aspect, the seventh aspect, or the ninth aspect. The optical receiving device includes the apparatus for detecting the optical fiber link according to the fourth aspect, the sixth aspect, the eighth aspect, or the tenth aspect.

According to a twelfth aspect, a computer-readable storage medium is provided. The computer-readable storage medium stores a computer program. When the computer program is executed, at least a part of the steps in the method according to the first aspect or any optional manner of the first aspect are implemented, or at least a part of the steps in the method according to the second aspect or any optional manner of the second aspect are implemented.

According to a thirteenth aspect, a computer program product is provided. The computer program product includes a program or code. When the program or the code is executed, at least a part of the steps in the method according to the first aspect or any optional manner of the first aspect are implemented, or at least a part of the steps in the method according to the second aspect or any optional manner of the second aspect are implemented.

According to a fourteenth aspect, a chip is provided. The chip includes a programmable logic circuit and/or program instructions. When the chip is run, the chip is configured to: implement at least a part of the steps in the method according to the first aspect or any optional manner of the first aspect, or implement at least a part of the steps in the method according to the second aspect or any optional manner of the second aspect.

For technical effects of the third aspect to the fourteenth aspect, refer to the technical effects of the first aspect and the second aspect. Details are not described herein again.

### BRIEF DESCRIPTION OF DRAWINGS

FIG. 1 is a diagram of an optical fiber communication system according to an embodiment of this application;
FIG. 2 is a diagram of an application scenario according to an embodiment of this application;
FIG. 3 is a flowchart of a method for detecting an optical fiber link according to an embodiment of this application;
FIG. 4 is a diagram of a first sequence according to an embodiment of this application;
FIG. 5 is a diagram of a second sequence according to an embodiment of this application;
FIG. 6 is a diagram of an autocorrelation curve of a first sequence and an autocorrelation curve of a second sequence according to an embodiment of this application;
FIG. 7 is a diagram of an autocorrelation curve corresponding to a detection sequence carried in a first optical signal obtained through modulation according to an embodiment of this application;
FIG. 8 is a distribution diagram of a plurality of detection sequences in a first optical signal according to an embodiment of this application;
FIG. 9 is another distribution diagram of a plurality of detection sequences in a first optical signal according to an embodiment of this application;
FIG. 10 is a diagram of generating a first optical signal according to an embodiment of this application;
FIG. 11 is another diagram of generating a first optical signal according to an embodiment of this application;
FIG. 12 is still another diagram of generating a first optical signal according to an embodiment of this application;
FIG. 13 is yet another diagram of generating a first optical signal according to an embodiment of this application;
FIG. 14 is yet another diagram of generating a first optical signal according to an embodiment of this application;
FIG. 15 is yet another diagram of generating a first optical signal according to an embodiment of this application;
FIG. 16 is yet another diagram of generating a first optical signal according to an embodiment of this application;
FIG. 17 is yet another diagram of generating a first optical signal according to an embodiment of this application;
FIG. 18 is a diagram of a correlation curve corresponding to a detection sequence obtained by demodulating a second optical signal according to an embodiment of this application;
FIG. 19 is a diagram of a method for detecting an optical fiber link according to an embodiment of this application;
FIG. 20 is a diagram of another method for detecting an optical fiber link according to an embodiment of this application;
FIG. 21 is a diagram of an apparatus for detecting an optical fiber link according to an embodiment of this application;
FIG. 22 is a diagram of another apparatus for detecting an optical fiber link according to an embodiment of this application;
FIG. 23 is a diagram of still another apparatus for detecting an optical fiber link according to an embodiment of this application; and
FIG. 24 is a diagram of yet another apparatus for detecting an optical fiber link according to an embodiment of this application.

### DESCRIPTION OF EMBODIMENTS

The following further describes in detail implementations of this application with reference to accompanying drawings.

An optical fiber communication system is a communication system that uses an optical fiber as a transmission medium. The optical fiber communication system obtains an optical signal with information through modulation, and uses the optical fiber for transmission, so that highspeed, long-distance, and large-capacity communication transmission can be implemented.

The optical fiber communication system usually includes an optical sending device, an optical receiving device, and an optical fiber link. The optical sending device is connected to the optical receiving device over the optical fiber link. The optical sending device obtains an optical signal with to-be-transmitted information through modulation and sends the optical signal to the optical receiving device over the optical fiber link. The optical receiving device receives the optical signal over the optical fiber link and obtains, through demodulation, the information carried in the optical signal. Exceptions in the optical fiber link may cause multi-path interference (multi-path interference, MPI) noise, mode partition noise (mode partition noise, MPN), and other impairments, leading to deterioration of the signal-to-noise ratio (signal-to-noise ratio, SNR) of the optical signal received by the optical receiving device. Specifically, the optical fiber link usually includes a plurality of segments of optical fibers and a plurality of connectors, and the connectors are configured to implement connections between the optical sending device, the optical receiving device, and the optical fibers. If a poor contact is caused by contamination of an end face of the connector, looseness of the connector, or the like, an optical signal (for ease of differentiation, the optical signal is referred to as an original optical signal) that is transmitted over the optical fiber link may be greatly reflected at the connector. Consequently, an optical signal reflected back and forth between different connectors, an optical signal reflected back and forth between the connector and an end face of a laser of the optical sending device (the end face of the laser of the optical sending device has a strong reflection capability, and it may be considered that the end face of the laser of the optical sending device is a fixed reflection point), and the like may be superimposed on the original optical signal, and MPI noise that is related to the original optical signal but has a high delay is generated. A delay of the MPI noise depends on a length of an optical fiber between two reflection points (for example, two connectors, or one connector and the end face of the laser of the optical sending device) that reflect the MPI noise back and forth. In a multi-mode scenario, a plurality of reflections caused by reflection points such as the connector and the end face of the laser of the optical sending device may further cause the MPN. Both the MPI noise and the MPN may cause deterioration of the signal-to-noise ratio of the optical signal received by the optical receiving device, affect transmission performance of the optical fiber transmission system, and even may cause an intermittent disconnection of the optical fiber link (the noise and the original optical signal are superimposed, and consequently, the optical receiving device cannot obtain, within short time by correctly demodulating the received optical signal, service data carried in the original optical signal). The signal-to-noise ratio of the optical signal is also referred to as an optical signal-to-noise ratio (optical signal-to-noise ratio, OSNR). The optical sending device and the optical receiving device are collectively referred to as an optical communication device. The optical sending device and the optical receiving device are relative concepts. Any optical communication device in the optical fiber communication system may be used as the optical sending device or the optical receiving device.

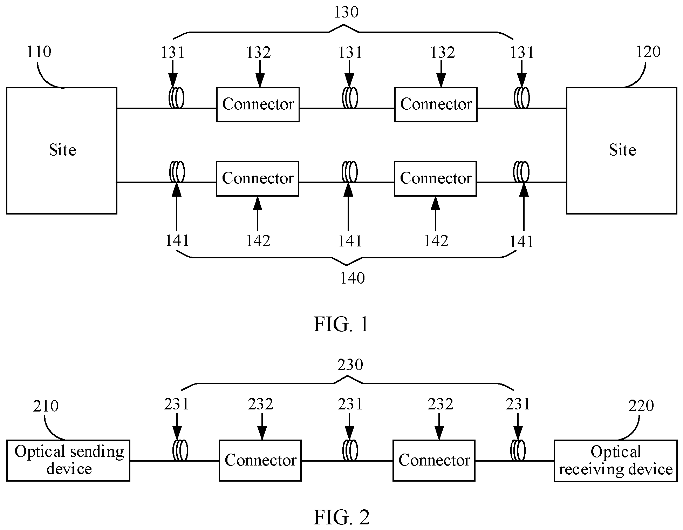

For example, FIG. 1 is a diagram of an optical fiber communication system. The optical fiber communication system includes a site 110 and a site 120. The site 110 is connected to the site 120 over an optical fiber link 130, and the site 110 is connected to the site 120 over an optical fiber link 140. Both the site 110 and the site 120 are optical communication devices. The optical fiber link 130 is a unidirectional link for communication between the site 110 and the site 120. The optical fiber link 130 includes a plurality of segments of optical fibers 131 and a plurality of connectors 132 (two connectors 132 are shown in FIG. 1), and two adjacent segments of optical fibers 131 are connected via the connector 132. The optical fiber link 140 is a unidirectional link for communication between the site 120 and the site 110. The optical fiber link 140 includes a plurality of segments of optical fibers 141 and a plurality of connectors 142 (two connectors 142 are shown in FIG. 1), and two adjacent segments of optical fibers 141 are connected via the connector 142. The site 110 is configured to: after obtaining an optical signal with to-be-transmitted information through modulation, send the optical signal (for example, referred to as an original optical signal 1) to the site 120 over the optical fiber link 130. The site 120 is configured to: receive the optical signal over the optical fiber link 130, and obtain, through demodulation, the information carried in the optical signal. In a process of transmission of the original optical signal 1 over the optical fiber link 130, if a poor contact is caused by contamination of an end face of the connector 132 on the optical fiber link 130, looseness of the connector 132, or the like, the original optical signal 1 may be greatly reflected at the connector 132, and consequently, an optical signal reflected back and forth between different connectors 132 and an optical signal reflected back and forth between the connector 132 and an end face of a laser of the site 110 may be superimposed on the original optical signal 1, and MPI noise that is related to the original optical signal 1 but has a high delay is generated. In a multi-mode scenario, a plurality of reflections caused by reflection points such as the connector 132 and the end face of the laser may further cause MPN. Both the MPI noise and the MPN may cause deterioration of a signal-to-noise ratio of the optical signal received by the site 120, affect transmission performance of the optical fiber transmission system, and even may cause an intermittent disconnection of the optical fiber link 130. Likewise, the site 120 is configured to: after obtaining an optical signal with to-be-transmitted information through modulation, send the optical signal (for example, referred to as an original optical signal 2) to the site 110 over the optical fiber link 140. The site 110 is configured to: receive the optical signal over the optical fiber link 140, and obtain, through demodulation, the information carried in the optical signal. In a process of transmission of the original optical signal 2 over the optical fiber link 140, if a poor contact is caused by contamination of an end face of the connector 142 on the optical fiber link 140, looseness of the connector 142, or the like, the original optical signal 2 may be greatly reflected at the connector 142, and consequently, an optical signal reflected back and forth between different connectors 142 and an optical signal reflected back and forth between the connector 142 and an end face of a laser of the site 120 may be superimposed on the original optical signal 2, and MPI noise that is related to the original optical signal 2 but has a high delay is generated. In the multi-mode scenario, a plurality of reflections caused by reflection points such as the connector 142 and the end face of the laser may further cause MPN. Both the MPI noise and the MPN may cause deterioration of a signal-to-noise ratio of the optical signal received by the site 110, affect the transmission performance of the optical fiber transmission system, and even may cause an intermittent disconnection of the optical fiber link 140.

Based on the foregoing descriptions, it can be learned that impact of the optical fiber link on the transmission performance of the optical fiber transmission system is critical. Therefore, to avoid affecting the transmission performance of the optical fiber transmission system by exceptions in the optical fiber link, it is necessary to detect the optical fiber link. For example, a common length of the optical fiber link is usually from several meters to dozens of kilometers; and the optical fiber link may be detected when the transmission performance of the optical fiber transmission system deteriorates; or the optical fiber link may be periodically detected when the transmission performance of the optical fiber transmission system does not deteriorate, to warn of the transmission performance of the optical fiber link in advance.

Currently, the transmission performance of the optical fiber link is usually detected by using an optical time domain reflectometer (optical time domain reflectometer, OTDR). The OTDR detects the transmission performance of the optical fiber link based on a time domain reflection technology, for example, detects a loss, attenuation, a reflection position, and a fault position of the optical fiber link. For example, an OTDR may be deployed on the optical fiber link, and controlled to send optical signals to the optical fiber link and then detect reflected signals. The transmission performance of the optical fiber link is determined based on the reflected signals detected by the OTDR. For example, based on information such as time, strength, and a waveform of the reflected signal detected by the OTDR, whether the optical fiber link is faulty, the fault position of the optical fiber link, and other transmission performance are determined. Specifically, the OTDR includes a laser and a detector, where the laser and the detector are deployed at a same end of the optical fiber link, the laser is configured to send the optical signal to the optical fiber link, and the detector is configured to detect the reflected signal of the optical signal after the laser sends the optical signal to the optical fiber link. In order that the reflected signal can be emitted into the detector, it is also necessary for a circulator or a power splitter to be disposed on the optical fiber link, and the detector is caused to be connected to the optical fiber link via the circulator or the power splitter. The reflected signal is coupled to the detector via the power splitter or the circulator, to facilitate the detector in detecting the reflected signal.

However, in the solution in which the optical fiber link is detected by using the OTDR, it is necessary to deploy hardware such as the OTDR and the circulator (or the power splitter) on the optical fiber link, and perform optical fiber plugging and unplugging. Consequently, implementation of the hardware for detecting the optical fiber link is complex, detection costs are high, and an implementation process is complex.

In addition to the solution in which the optical fiber link is detected by using the OTDR, currently, a staff member may further carry an instrument to a site to perform fault diagnosis on the optical fiber link. However, in this solution, an operation is complex, an implementation process is complex, and detection labor costs are higher.

Embodiments of this application provide a method and an apparatus for detecting an optical fiber link, and an optical fiber communication system. The optical fiber communication system includes an optical sending device, an optical receiving device, and an optical fiber link, and the optical sending device is connected to the optical receiving device over the optical fiber link. The optical sending device sends, to the optical receiving device over the optical fiber link, an optical signal that carries a detection sequence, and the optical receiving device determines transmission performance of the optical fiber link based on the detection sequence carried in the optical signal, thereby detecting the optical fiber link. It can be learned that, embodiments of this application leverage the existing optical sending device and optical receiving device in the optical fiber communication system to detect the transmission performance of the optical fiber link, eliminating the need for additional devices such as an OTDR and a circulator (or a power splitter) and optical fiber plugging and unplugging. Therefore, hardware implementation for optical fiber link detection is simplified, detection costs are reduced, and in-line detection can be implemented. In addition, it is unnecessary for a staff member to carry an instrument to a site to perform fault diagnosis, reducing detection labor costs.

The following describes the technical solutions in embodiments of this application. An application scenario of embodiments of this application is first described.

FIG. 2 is a diagram of an application scenario according to an embodiment of this application. This application scenario provides an optical fiber communication system. The optical fiber communication system includes an optical sending device 210, an optical receiving device 220, and an optical fiber link 230. The optical sending device 210 is connected to the optical receiving device 220 over the optical fiber link 230. The optical fiber link 230 includes a plurality of segments of optical fibers 231 and a plurality of connectors 232, and two adjacent segments of optical fibers 231 are connected via the connector 232. The optical fiber link 230 may be a bidirectional optical fiber link between the optical sending device 210 and the optical receiving device 220, or may be a unidirectional optical fiber link between the optical sending device 210 and the optical receiving device 220. That is, the optical fiber link 230 is used by the optical sending device 210 to send an optical signal to the optical receiving device 220, and is used by the optical receiving device 220 to send an optical signal to the optical sending device 210. Alternatively, the optical fiber link 230 is used by the optical sending device 210 to send an optical signal to the optical receiving device 220, and is not used by the optical receiving device 220 to send an optical signal to the optical sending device 210.

The optical sending device 210 and the optical receiving device 220 are collectively referred to as an optical communication device. The optical communication device includes an optical module and/or an optical line card, and the optical module or the optical line card performs a function related to optical signal processing. Optionally, the optical module and/or the optical line card are/is disposed in the optical communication device in a pluggable manner. For example, the optical communication device includes a slot, and the optical module and/or the optical line card are/is plugged into the slot to be disposed in the optical communication device. In embodiments of this application, the optical communication device is a network device, a terminal device, or a server. The network device may be an optical transport network device, a switch, a router, or the like. The terminal device may be a personal computer (personal computer, PC), a desktop computer, a printer, a camera, or the like. For example, the optical module is disposed in the optical transport network device, the switch, the router, or the terminal device in a pluggable manner, and the optical line card is disposed in the optical transport network device or a datacom device in a pluggable manner.

In this embodiment of this application, the optical sending device 210 includes any one of a network device, a terminal device, or a server, and the optical receiving device 220 includes any one of a network device, a terminal device, or a server. The optical sending device 210 and the optical receiving device 220 may be optical communication devices of a same type, or may be optical communication devices of different types. In an example, both the optical sending device 210 and the optical receiving device 220 are network devices. For example, both the optical sending device 210 and the optical receiving device 220 are switches or routers. In another example, both the optical sending device 210 and the optical receiving device 220 are terminal devices. For example, both the optical sending device 210 and the optical receiving device 220 are PCs or desktop computers. In still another example, both the optical sending device 210 and the optical receiving device 220 are servers. In yet another example, the optical sending device 210 is a network device, and the optical receiving device 220 is a terminal device or a server. In yet another example, the optical sending device 210 is a terminal device, and the optical receiving device 220 is a network device or a server. In yet another example, the optical sending device 210 is a server, and the optical receiving device 220 is a network device or a terminal device.

In this embodiment of this application, the optical sending device 210 may send, to the optical receiving device 220 over the optical fiber link 230, an optical signal that carries a detection sequence. The optical receiving device 220 receives the optical signal over the optical fiber link 230. The optical receiving device 220 demodulates the optical signal to obtain the detection sequence. The optical receiving device 220 determines, based on the detection sequence obtained through demodulation, transmission performance of the optical fiber link 230. In this way, the optical sending device 210 and the optical receiving device 220 are leveraged to detect the optical fiber link 230, eliminating the need for additional devices such as an OTDR and a circulator (or a power splitter) on the optical fiber link 230, optical fiber plugging and unplugging, and the like, thereby simplifying hardware implementation for detecting the optical fiber link 230, reducing detection costs, and implementing in-line detection. In addition, it is unnecessary for a staff member to go to a site to perform fault diagnosis, reducing detection labor costs.

It should be noted that the application scenario shown in FIG. 2 is merely used as an example, and is not intended to limit the technical solutions in this application. A structure of the optical fiber communication system may be adjusted based on an actual requirement. For example, a length of the optical fiber link 230, a quantity of the connectors 232 included on the optical fiber link 230, and the like may be adjusted based on the actual requirement. In addition, the application scenario of this embodiment of this application may further include a control device, a network management device, or the like. The optical sending device 210 and the optical receiving device 220 may be separately connected to the control device or the network management device. The control device or the network management device may control the optical sending device 210 and the optical receiving device 220. For example, the control device or the network management device controls the optical sending device 210 to send, to the optical receiving device 220 over the optical fiber link 230, the optical signal that carries the detection sequence, and controls the optical receiving device 220 to demodulate the optical signal to obtain the detection sequence, so that the optical receiving device 220 determines, based on the detection sequence obtained through demodulation, the transmission performance of the optical fiber link 230. This is not limited in this embodiment of this application.

The foregoing describes the application scenario of embodiments of this application, and the following describes method embodiments of this application.

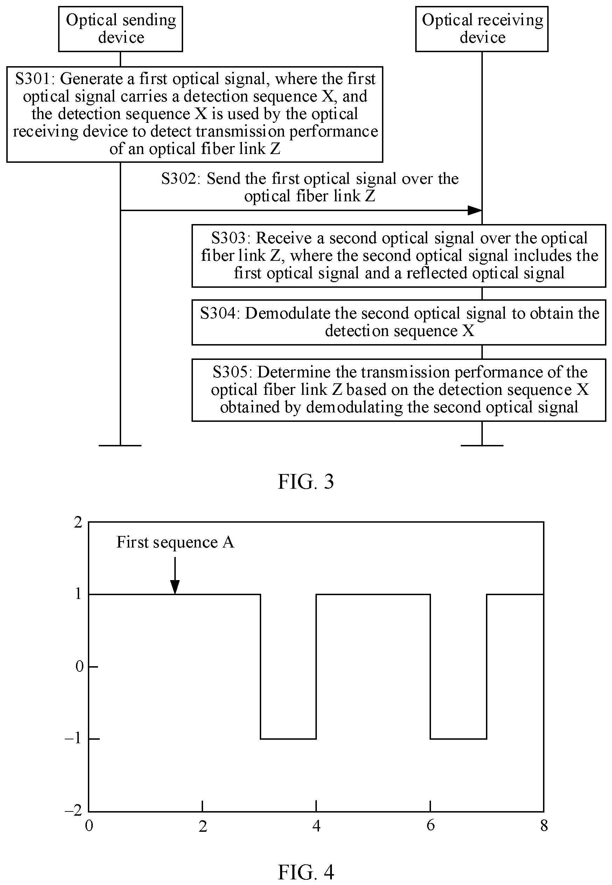

FIG. 3 is a flowchart of a method for detecting an optical fiber link according to an embodiment of this application. The detection method is executed by an optical sending device in cooperation with an optical receiving device, where the two devices are in an optical fiber communication system. For example, the optical fiber communication system is shown in FIG. 2, and the detection method is executed by the optical sending device 210 in cooperation with the optical receiving device 220. Refer to FIG. 3. The detection method includes the following steps S301 to S305.

S301: The optical sending device generates a first optical signal, where the first optical signal carries a detection sequence X, and the detection sequence X is used by the optical receiving device to detect transmission performance of an optical fiber link Z.

For example, the optical sending device is the optical sending device 210 in the optical fiber communication system shown in FIG. 2, and the optical fiber link Z is the optical fiber link 230.

In an optional embodiment, an autocorrelation curve corresponding to the detection sequence X satisfies a preset condition.

In an optional embodiment, that the autocorrelation curve corresponding to the detection sequence X satisfies the preset condition includes: The autocorrelation curve corresponding to the detection sequence X has one characteristic peak. For example, the autocorrelation curve corresponding to the detection sequence X has only one characteristic peak. For example, the autocorrelation curve corresponding to the detection sequence X has only one characteristic peak, and an autocorrelation value at each point on the autocorrelation curve corresponding to the detection sequence X other than the characteristic peak is relatively small (for example, quite small). For example, the autocorrelation value at the point on the autocorrelation curve corresponding to the detection sequence X other than the characteristic peak is 0. In an example, the detection sequence X includes either of a pseudo random binary sequence (pseudo random binary sequence, PRBS) or a Golay complementary sequence. The Golay complementary sequence is a pulse code sequence. An autocorrelation curve corresponding to the PRBS and an autocorrelation curve corresponding to the Golay complementary sequence each have one characteristic peak. Therefore, in embodiments of this application, the PRBS or the Golay complementary sequence may be used as the detection sequence X.

In an optional embodiment, the detection sequence X includes a first sequence A and a second sequence B. The autocorrelation curve corresponding to the detection sequence X is determined based on an autocorrelation curve of the first sequence A and an autocorrelation curve of the second sequence B. For example, the autocorrelation curve corresponding to the detection sequence X is a superposition curve of the autocorrelation curve of the first sequence A and the autocorrelation curve of the second sequence B. Points on the autocorrelation curve corresponding to the detection sequence X, points on the autocorrelation curve of the first sequence A, and points on the autocorrelation curve of the second sequence B are in one-to-one correspondence. An autocorrelation value at each point on the autocorrelation curve corresponding to the detection sequence X is equal to a sum of an autocorrelation value at the point on the autocorrelation curve of the first sequence A and an autocorrelation value at the point on the autocorrelation curve of the second sequence B. An autocorrelation curve of each of the first sequence A and the second sequence B has at least one wave peak. The at least one wave peak includes a main peak, and may further include a secondary peak. A peak value of the main peak (namely, an autocorrelation value of the main peak) is greater than a first threshold, and a peak value of the secondary peak (namely, an autocorrelation value of the secondary peak) is less than a second threshold. The first threshold is greater than the second threshold, and a difference between the first threshold and the second threshold is greater than a preset difference. The first threshold, the second threshold, and the preset difference may all be set based on an actual case. That is, on the autocorrelation curve of each of the first sequence A and the second sequence B, the peak value of the main peak is larger (for example, quite large), and the peak value of the secondary peak is smaller (for example, quite small). For example, a peak value of a main peak on the autocorrelation curve of the first sequence A is quite large, an autocorrelation value at each point on the autocorrelation curve of the first sequence A other than the main peak is quite small, a peak value of a main peak on the autocorrelation curve of the second sequence B is quite large, an autocorrelation value at each point on the autocorrelation curve of the second sequence B other than the main peak is quite small, and the autocorrelation value at each point on the autocorrelation curve of the first sequence A other than the main peak is the negative of the autocorrelation value at each point on the autocorrelation curve of the second sequence B other than the main peak, so that the autocorrelation curve (for example, the superposition curve of the autocorrelation curve of the first sequence A and the autocorrelation curve of the second sequence B) corresponding to the detection sequence X and determined based on the autocorrelation curve of the first sequence A and the autocorrelation curve of the second sequence B has only one characteristic peak, and the autocorrelation value at each point on the autocorrelation curve other than the characteristic peak is 0. In an embodiment, in the detection sequence X, the second sequence B is located after the first sequence A, and the second sequence B is adjacent to the first sequence A. Both a length of the first sequence A and a length of the second sequence B are fixed lengths, and the length of the first sequence A may be or may not be equal to the length of the second sequence B. For example, the length of the first sequence A is equal to the length of the second sequence B.

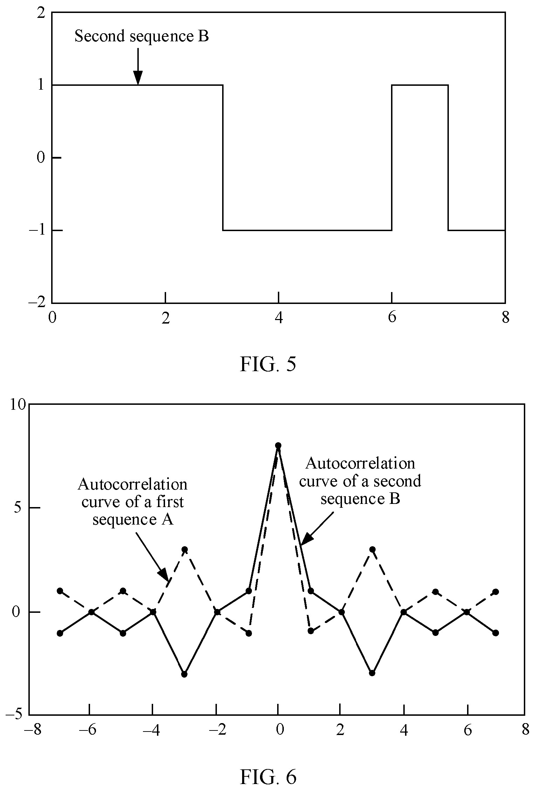

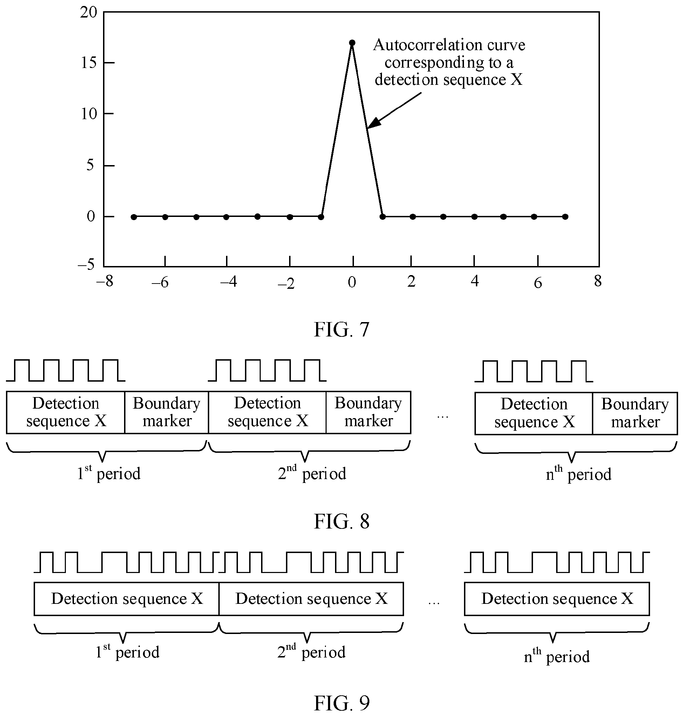

In an example, the first sequence A is 1, 1, 1, -1, 1, 1, -1, 1, and the second sequence B is 1, 1, 1, -1, -1, -1, 1, -1. The first sequence A is shown in FIG. 4 (a horizontal axis represents a quantity of symbols included in the first sequence A, and a vertical axis represents an amplitude of the symbol included in the first sequence A). The second sequence B is shown in FIG. 5 (a horizontal axis represents a quantity of symbols included in the second sequence B, and a vertical axis represents an amplitude of the symbol included in the second sequence B). The autocorrelation curve of the first sequence A and the autocorrelation curve of the second sequence B are shown in FIG. 6. Refer to FIG. 6. The peak value of the main peak on the autocorrelation curve of the first sequence A is quite large, the autocorrelation value at each point on the autocorrelation curve of the first sequence A other than the main peak is quite small, the peak value of the main peak on the autocorrelation curve of the second sequence B is quite large, the autocorrelation value at each point on the autocorrelation curve of the second sequence B other than the main peak is quite small, and the autocorrelation value at each point on the autocorrelation curve of the first sequence A other than the main peak is the negative of the autocorrelation value at each point on the autocorrelation curve of the second sequence B other than the main peak. For example, the detection sequence X includes the first sequence A and the second sequence B, the second sequence B is located after the first sequence A, the second sequence B is adjacent to the first sequence A, the detection sequence X is 1, 1, 1, -1, 1, 1, -1, 1, 1, 1, 1, -1, -1, -1, 1, -1, the autocorrelation curve corresponding to the detection sequence X is the superposition curve of the autocorrelation curve of the first sequence A and the autocorrelation curve of the second sequence B (a superposition curve of the two curves in FIG. 6), and the autocorrelation curve corresponding to the detection sequence X is shown in FIG. 7. Refer to FIG. 7. The autocorrelation curve corresponding to the detection sequence X has one characteristic peak, and the autocorrelation value at each point on the autocorrelation curve other than the characteristic peak is 0. In FIG. 6 and FIG. 7, a horizontal axis represents a time shift symbol quantity, and a vertical axis represents an autocorrelation value (namely, a correlation). It should be noted that, to obtain an autocorrelation curve of a sequence, one of the two sequences is to be moved by a specific quantity of symbols (namely, the time shift symbol quantity) relative to the other sequence. In FIG. 6 and FIG. 7, a time shift symbol quantity represented by a negative number and a time shift symbol quantity represented by a positive number indicate different movement directions. For example, the time shift symbol quantity represented by the negative number indicates moving leftward, and the time shift symbol quantity represented by the positive number indicates moving rightward.

In an optional embodiment, the detection sequence X is the Golay complementary sequence. There are many methods for generating the Golay complementary sequence. For example, a Golay complementary sequence with a length of 2L may be generated based on a Golay complementary sequence with a length of L, a Golay complementary sequence with a length of 4L may be generated based on the Golay complementary sequence with the length of 2L, a Golay complementary sequence with a length of 8L may be generated based on the Golay complementary sequence with the length of 4L, and so on.

For example, the Golay complementary sequence is generated in a recursion manner shown in the following Formula (1). A high-order Golay complementary sequence (namely, a longer Golay complementary sequence) may be generated based on a low-order Golay complementary sequence (namely, a shorter Golay complementary sequence) and the following Formula (1). $\left\{\begin{matrix}A \\ B\end{matrix}\right\} \to \left\{\begin{matrix}\left.A\right| & B \\ \left.A\right| & \overline{B}\end{matrix}\right\}$ Formula (1)

In the foregoing Formula (1), the symbol "|" represents a connection, "A|B" represents that the sequence B is placed on a right side of (in other words, after) the sequence A, and B̅ represents negation of B. For example, if B=1, B̅=-1; or if B=-1, B̅=1.

In an example, a Golay complementary sequence with a length of 1 is $\left\{\begin{matrix}1 \\ 1\end{matrix}\right\}$, and a process of generating a Golay complementary sequence with a length of 2 based on the Golay complementary sequence with the length of 1 is shown in the following Formula (2). $\left\{\begin{matrix}1 \\ 1\end{matrix}\right\} \to \left\{\begin{matrix}1 & 1 \\ 1 & - 1\end{matrix}\right\}$ Formula (2)

A process of generating a Golay complementary sequence with a length of 4 based on the Golay complementary sequence with the length of 2 is shown in the following Formula (3). $\left\{\begin{matrix}1 & 1 \\ 1 & - 1\end{matrix}\right\} \to \left\{\begin{matrix}1 & 1 & 1 & - 1 \\ 1 & 1 & - 1 & 1\end{matrix}\right\}$ Formula (3)

A process of generating a Golay complementary sequence with a length of 8 based on the Golay complementary sequence with the length of 4 is shown in the following Formula (4). $\left\{\begin{matrix}1 & 1 & 1 & - 1 \\ 1 & 1 & - 1 & 1\end{matrix}\right\} \to \left\{\begin{matrix}1 & 1 & 1 & - 1 & 1 & 1 & - 1 & 1 \\ 1 & 1 & 1 & - 1 & - 1 & - 1 & 1 & - 1\end{matrix}\right\}$ Formula (4)

By analogy, a higher-order Golay complementary sequence may be generated. For example, a Golay complementary sequence with a length of 16 is generated based on the Golay complementary sequence with the length of 8, a Golay complementary sequence with a length of 32 is generated based on the Golay complementary sequence with the length of 16, and a Golay complementary sequence with a length of 64 is generated based on the Golay complementary sequence with the length of 32. For example, as described above, the first sequence A is 1, 1, 1, - 1, 1, 1, -1, 1, and the second sequence B is 1, 1, 1, -1, -1, -1, 1, -1. It can be learned from the foregoing Formula (4) that the first sequence A and the second sequence B are two subsets of the Golay complementary sequence, with the length of 8, expressed in the foregoing Formula (4). The detection sequence X may be the Golay complementary sequence expressed in the foregoing Formula (4) or the higher-order Golay complementary sequence. In this embodiment of this application, an example in which the detection sequence X is the Golay complementary sequence expressed in the foregoing Formula (4) is used. The autocorrelation curve corresponding to the detection sequence X is shown in FIG. 7.

In the foregoing descriptions, an example in which the autocorrelation curve corresponding to the detection sequence X is determined based on the autocorrelation curve of the first sequence A and the autocorrelation curve of the second sequence B is used, and an example in which the detection sequence X is the Golay complementary sequence is mainly used. The foregoing related descriptions of the autocorrelation curve corresponding to the detection sequence X are also applicable to a case in which the detection sequence X is the pseudo random binary sequence. When the detection sequence X is the pseudo random binary sequence, autocorrelation calculation may alternatively be directly performed on the detection sequence X to obtain the autocorrelation curve of the detection sequence X. This is not limited in embodiments of this application.

In an optional embodiment, the first optical signal carries a plurality of detection sequences X, and the plurality of detection sequences X are periodically distributed. That is, the plurality of detection sequences X are periodically distributed in the first optical signal. The plurality of detection sequences X may all be used by the optical receiving device to detect the transmission performance of the optical fiber link Z. The first optical signal, through transmission over the optical fiber link Z between the optical sending device and the optical receiving device, forms a second optical signal, which includes the first optical signal and a reflected optical signal. The reflected optical signal is an optical signal generated by reflecting the first optical signal on the optical fiber link Z. For example, the reflected optical signal is an optical signal generated by reflecting the first optical signal a plurality of times (for example, an even number of times) between reflection points on the optical fiber link Z, and the reflection points include a connector, an end face of a laser of the optical sending device, and the like. Strength of the reflected optical signal depends on reflection strength of the reflection points. In this embodiment of this application, the first optical signal carries the plurality of detection sequences X. Therefore, the second optical signal also carries the plurality of detection sequences X, so that the optical receiving device can obtain the detection sequence X by demodulating the second optical signal, thereby determining the transmission performance of the optical fiber link Z based on the detection sequence X obtained through demodulation. For example, if the first optical signal carries only one detection sequence X, the second optical signal also carries only the detection sequence X, and the optical receiving device can determine the transmission performance of the optical fiber link Z based on the detection sequence X only by obtaining the detection sequence X by accurately demodulating the second optical signal. However, if the first optical signal carries the plurality of detection sequences X, the second optical signal also carries the plurality of detection sequences X, and provided that the optical receiving device can obtain any one of the plurality of detection sequences X by demodulating the second optical signal, the optical receiving device can determine the transmission performance of the optical fiber link Z based on the detection sequence X obtained by demodulating the second optical signal. Therefore, difficulty in obtaining the detection sequence X by demodulating the second optical signal by the optical receiving device is reduced.

In an embodiment, the first optical signal carries the plurality of detection sequences X, and the plurality of detection sequences X are periodically distributed; and there is a boundary marker between adjacent detection sequences X in the plurality of detection sequences X. The boundary marker is used by the optical receiving device to determine a start position and/or an end position of the detection sequence X, thereby determining the detection sequence X. For example, the boundary marker is an idle sequence. The idle sequence may be an all-zero sequence (that is, all symbols in the idle sequence are 0), or may be a sequence with an amplitude less than an amplitude of the detection sequence. For example, the amplitude of the idle sequence is half of the amplitude of the detection sequence. In an example, FIG. 8 is a distribution diagram of a plurality of detection sequences X in a first optical signal. The first optical signal carries n detection sequences X, there is a boundary marker between adjacent detection sequences X, the n detection sequences X are periodically distributed, and there is one detection sequence X and one boundary marker in each period, where n is a positive integer. A length of the detection sequence X may be different from a length of the boundary marker, and both the length of the detection sequence X and the length of the boundary marker are set based on an actual case. When the length of the boundary marker is 0, it may be considered that there is no boundary marker. When the length of the boundary marker is greater than 0, it may be considered that there is a boundary marker between the adjacent detection sequences X in the plurality of detection sequences X. In addition, it may be considered that there is an interval between the adjacent detection sequences X. In other words, the adjacent detection sequences X are non-contiguous.

In another embodiment, the first optical signal carries the plurality of detection sequences X, and the plurality of detection sequences X are periodically distributed; and adjacent detection sequences X in the plurality of detection sequences X are contiguous, there is no boundary marker between the adjacent detection sequences X in the plurality of detection sequences X, and there is no interval between the adjacent detection sequences X in the plurality of detection sequences X. In an example, FIG. 9 is another distribution diagram of a plurality of detection sequences X in a first optical signal. The first optical signal carries n detection sequences X, adjacent detection sequences X in the plurality of detection sequences X are contiguous, there is no interval between the adjacent detection sequences X, the n detection sequences X are periodically distributed, and there is one detection sequence X in each period, where n is a positive integer. A length of the detection sequence X is a specific length, and the length of the detection sequence X may be set based on an actual case.

In an optional embodiment, the first optical signal further carries a data signal Y. In other words, the first optical signal carries the detection sequence X and the data signal Y. In this case, in this embodiment of this application, the detection sequence X and the data signal Y are carried in a same optical signal, so that in-line detection of the transmission performance of the optical fiber link Z can be implemented. For the data signal Y, the detection sequence X belongs to noise. Therefore, in the first optical signal, a modulation depth of the detection sequence X is less than a modulation depth of the data signal Y, and a baud rate of the detection sequence X is less than a baud rate of the data signal Y. In this way, while in-line detection of the transmission performance of the optical fiber link Z is implemented, it can be avoided that the detection sequence X affects the data signal Y.

In an optional embodiment, in the first optical signal, a ratio of the modulation depth of the detection sequence X to the modulation depth of the data signal Y is less than a preset ratio, and a difference between the baud rate of the detection sequence X and the baud rate of the data signal Y is within a preset range. Both the preset ratio and the preset range may be set based on an actual case. For example, the preset ratio is 0.1, and the preset range is several MHz (megahertz) to several GHz (gigahertz). Because the ratio of the modulation depth of the detection sequence X to the modulation depth of the data signal Y is less than the preset ratio, the baud rate of the detection sequence X is less than the baud rate of the data signal Y, and the difference between the baud rate of the detection sequence X and the baud rate of the data signal Y is within the preset range, while it is avoided that the detection sequence X affects the data signal Y, it can be avoided that the baud rate of the detection sequence X is too small to detect the optical fiber link Z.

In embodiments of this application, the optical sending device may generate the first optical signal in a direct modulation scheme and/or an external modulation scheme. The direct modulation scheme is a scheme in which modulation is performed inside a light source, and is specifically a modulation scheme in which the light source is directly controlled (for example, the light source is a laser, and a pump source of the laser is directly controlled) to modulate an optical signal emitted by the light source. The direct modulation scheme is also referred to as an internal modulation scheme. The external modulation scheme is a scheme in which modulation is performed outside the light source, and is specifically a scheme in which the optical signal emitted by the light source is modulated by using a modulator outside the light source. In embodiments of this application, the light source may be the laser (laser), a laser diode (laser diode, LD), or another possible light source. The laser may include any one of a vertical cavity surface emitting laser (vertical cavity surface emitting laser, VCSEL), an electro-absorption modulated laser (electro-absorption modulated laser, EML), and a directly modulated laser (directly modulated laser, DML). The modulator may be a Mach-Zehnder modulator (Mach-Zehnder modulator, MZM), an electrical variable optical attenuator (electrical variable optical attenuator, EVOA), or another possible modulator. The light source and the modulator are not limited in embodiments of this application.

The following describes two implementations in which the optical sending device generates the first optical signal.

**First implementation:** The optical sending device obtains the first optical signal with the detection sequence X through modulation in the direct modulation scheme.

Specifically, the optical sending device modulates, by using the detection sequence X, a drive signal (for example, a drive current) of the light source, to cause the light source to emit the first optical signal that carries the detection sequence X. When the first optical signal further carries the data signal Y, the optical sending device may obtain the first optical signal with the data signal Y through modulation in the direct modulation scheme, or may obtain the first optical signal with the data signal Y through modulation in the external modulation scheme.

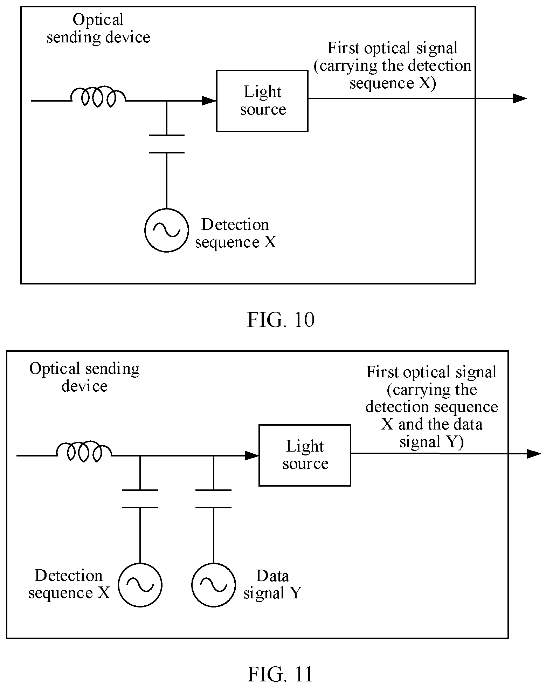

In an example, the first optical signal carries the detection sequence X, and does not carry the data signal Y. The optical sending device obtains the first optical signal with the detection sequence X through modulation in the direct modulation scheme, in other words, the optical sending device generates the first optical signal in the direct modulation scheme. FIG. 10 is a diagram of generating a first optical signal by an optical sending device according to an embodiment of this application. As shown in FIG. 10, the optical sending device includes a light source, and the optical sending device modulates, by using the detection sequence X, a drive signal of the light source, to cause the light source to emit the first optical signal that carries the detection sequence X.

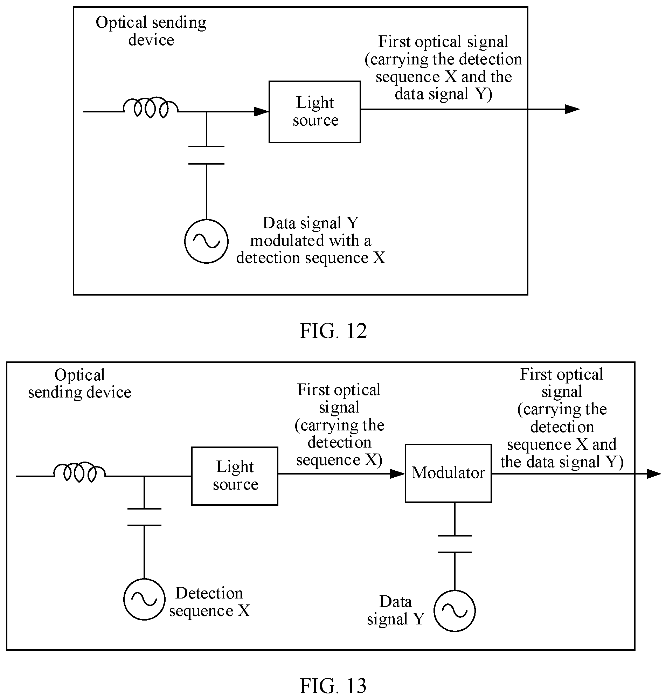

In another example, the first optical signal carries the detection sequence X and the data signal Y. The optical sending device obtains the first optical signal with the detection sequence X and the data signal Y through modulation in the direct modulation scheme. The optical sending device generates, in the direct modulation scheme, the first optical signal that carries the detection sequence X and the data signal Y. FIG. 11 is another diagram of generating a first optical signal by an optical sending device according to an embodiment of this application. As shown in FIG. 11, the optical sending device includes a light source, and the optical sending device modulates, by using the detection sequence X and the data signal Y sequentially, a drive signal of the light source, to cause the light source to emit the first optical signal that carries the detection sequence X and the data signal Y. FIG. 11 is described by using an example in which the optical sending device first modulates, by using the detection sequence X, the drive signal of the light source, and then modulates, by using the data signal Y, such a drive signal of the light source. In some embodiments, the optical sending device first modulates, by using the data signal Y, the drive signal of the light source, and then modulates, by using the detection sequence X, such a drive signal of the light source. In some other embodiments, as shown in FIG. 12, the optical sending device obtains a data signal Y with the detection sequence X through modulation, and the optical sending device modulates, by using the data signal Y modulated with the detection sequence X, the drive signal of the light source, to cause the light source to emit the first optical signal that carries the detection sequence X and the data signal Y. This is not limited in embodiments of this application.

In still another example, the first optical signal carries the detection sequence X and the data signal Y. The optical sending device obtains a first optical signal with the detection sequence X through modulation in the direct modulation scheme, and the first optical signal with the data signal Y through modulation in the external modulation scheme. That is, the optical sending device generates, in the direct modulation scheme and the external modulation scheme, the first optical signal that carries the detection sequence X and the data signal Y. FIG. 13 is still another diagram of generating a first optical signal by an optical sending device according to an embodiment of this application. As shown in FIG. 13, the optical sending device includes a light source and a modulator, and the optical sending device modulates, by using the detection sequence X, a drive signal of the light source, to cause the light source to emit a first optical signal that carries the detection sequence X. The first optical signal emitted by the light source and carrying the detection sequence X is emitted into the modulator, and the modulator modulates, by using the data signal Y, the first optical signal that carries the detection sequence X, to obtain a first optical signal that carries the detection sequence X and the data signal Y.

**Second implementation:** The optical sending device obtains the first optical signal with the detection sequence X through modulation in the external modulation scheme.

Specifically, the optical sending device modulates, by using the detection sequence X, the optical signal emitted by the light source, to obtain the first optical signal that carries the detection sequence X. When the first optical signal further carries the data signal Y, the optical sending device may obtain the first optical signal with the data signal Y through modulation in the direct modulation scheme, or may obtain the first optical signal with the data signal Y through modulation in the external modulation scheme.

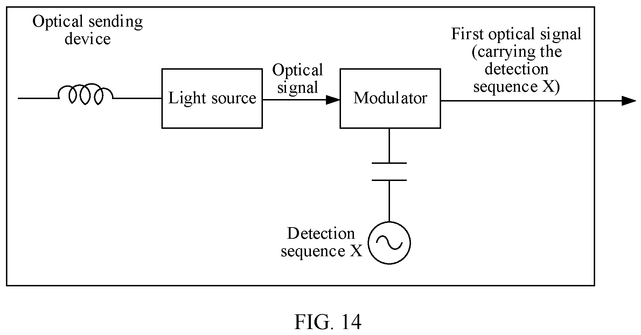

In an example, the first optical signal carries the detection sequence X, and does not carry the data signal Y. The optical sending device obtains the first optical signal with the detection sequence X through modulation in the external modulation scheme. The optical sending device generates the first optical signal in the external modulation scheme. FIG. 14 is still another diagram of generating a first optical signal by an optical sending device according to an embodiment of this application. As shown in FIG. 14, the optical sending device includes a light source and a modulator. The modulator modulates, by using the detection sequence X, an optical signal emitted by the light source, to obtain the first optical signal that carries the detection sequence X.

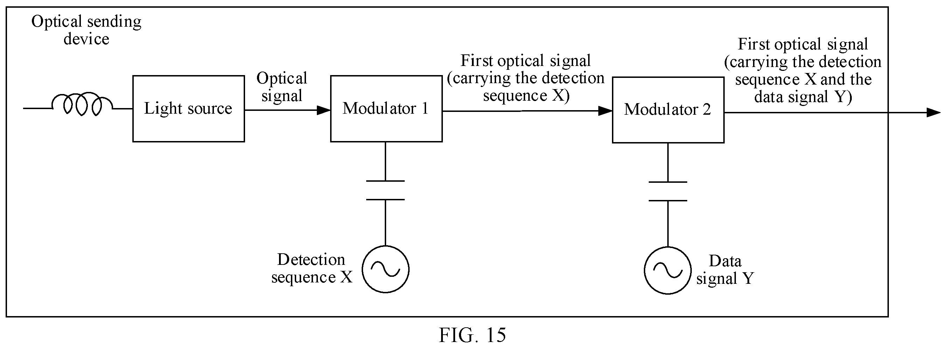

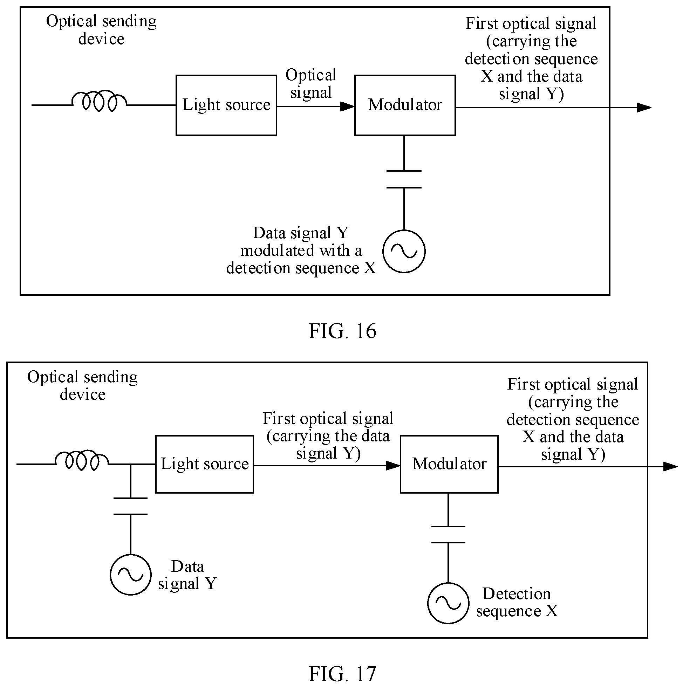

In another example, the first optical signal carries the detection sequence X and the data signal Y. The optical sending device obtains the first optical signal with the detection sequence X and the data signal Y through modulation in the external modulation scheme, in other words, the optical sending device generates, in the external modulation scheme, the first optical signal that carries the detection sequence X and the data signal Y. FIG. 15 is still another diagram of generating a first optical signal by an optical sending device according to an embodiment of this application. As shown in FIG. 15, the optical sending device includes a light source, a modulator 1, and a modulator 2. The modulator 1 modulates, by using the detection sequence X, an optical signal emitted by the light source, to obtain a first optical signal that carries the detection sequence X. The first optical signal obtained by the modulator 1 through modulation is emitted into the modulator 2. The modulator 2 modulates, by using the data signal Y, the first optical signal that carries the detection sequence X, to obtain the first optical signal that carries the detection sequence X and the data signal Y. That is, the optical sending device modulates, by using the detection sequence X and the data signal Y sequentially, the optical signal emitted by the light source, to obtain the first optical signal that carries the detection sequence X and the data signal Y. FIG. 15 is described by using an example in which the optical sending device first modulates the optical signal by using the detection sequence X, and then modulates the optical signal by using the data signal Y. In some embodiments, the optical sending device first modulates the optical signal by using the data signal Y, and then modulates such an optical signal by using the detection sequence X. In some other embodiments, as shown in FIG. 16, the optical sending device obtains a data signal Y with the detection sequence X through modulation, and the optical sending device modulates, by using the data signal Y modulated with the detection sequence X, the optical signal emitted by the light source, to obtain the first optical signal that carries the detection sequence X and the data signal Y. This is not limited in embodiments of this application.

In still another example, the first optical signal carries the detection sequence X and the data signal Y. The optical sending device obtains a first optical signal with the data signal Y through modulation in the direct modulation scheme, and the first optical signal with the detection sequence X through modulation in the external modulation scheme. That is, the optical sending device generates, in the direct modulation scheme and the external modulation scheme, the first optical signal that carries the detection sequence X and the data signal Y. FIG. 17 is still another diagram of generating a first optical signal by an optical sending device according to an embodiment of this application. As shown in FIG. 17, the optical sending device includes a light source and a modulator. The optical sending device modulates, by using the data signal Y, a drive signal of the light source, to cause the light source to emit a first optical signal that carries the data signal Y. The first optical signal emitted by the light source and carrying the data signal Y is emitted into the modulator. The modulator modulates, by using the detection sequence X, the first optical signal that carries the data signal Y, to obtain a first optical signal that carries the detection sequence X and the data signal Y.

In an optional embodiment, when the first optical signal carries the detection sequence X and the data signal Y, for the modulation schemes shown in FIG. 11, FIG. 12, and FIG. 16, the first optical signal may be expressed by using the following Formula (5). For the modulation schemes shown in FIG. 13, FIG. 15, and FIG. 17, the first optical signal may be expressed by using the following Formula (6). $P \left(t\right) = \left({P}_{0}\left(t\right)+C\right) ∗ \left(1+m∗{Patt}_{detect}\right)$ Formula (5) $P \left(t\right) = {P}_{0} \left(t\right) + m ∗ {Patt}_{detect}$ Formula (6)

In the foregoing Formula (5) and the foregoing Formula (6), P₀(t) represents the data signal Y, Patt_{detect} represents the detection sequence X, m represents the ratio of the modulation depth of the detection sequence X to the modulation depth of the data signal Y (when the modulation depth of the data signal Y is 1, m represents the modulation depth of the detection sequence X), C is a constant direct current bias, where C is a constant, and C exists to cause P₀(t) + C to be greater than 0, and the symbol "*" represents a multiplication sign.

S302: The optical sending device sends the first optical signal over the optical fiber link Z.

For example, the optical sending device includes an interface corresponding to the optical fiber link Z, and the optical sending device sends the first optical signal through the interface, to send the first optical signal over the optical fiber link Z. The interface is a physical (physical, PHY) interface. For example, the interface is a gigabit Ethernet (gigabyte Ethernet, GE) interface (for example, a 400GE interface), or a terabit Ethernet (terabit Ethernet, TE) interface.

S303: The optical receiving device receives the second optical signal over the optical fiber link Z, where the second optical signal includes the first optical signal and the reflected optical signal.

For example, the optical receiving device is the optical receiving device 220 in the optical fiber communication system shown in FIG. 2, and the optical fiber link Z is the optical fiber link 230.

For example, the optical receiving device includes an interface corresponding to the optical fiber link Z, and the optical receiving device receives the first optical signal through the interface, to receive the first optical signal over the optical fiber link Z. The interface is a PHY interface. For example, the interface is a GE interface or a TE interface.

S304: The optical receiving device demodulates the second optical signal to obtain the detection sequence X.

In an optional embodiment, the first optical signal carries the plurality of periodically distributed detection sequences X. Correspondingly, the second optical signal carries the plurality of periodically distributed detection sequences X. The optical receiving device demodulates the second optical signal to obtain the plurality of detection sequences X.

In an embodiment, in the first optical signal, there is the boundary marker between the adjacent detection sequences X in the plurality of detection sequences X. Therefore, in the second optical signal, there is a boundary marker between adjacent detection sequences X in the plurality of detection sequences X. The optical receiving device determines, based on the boundary marker carried in the second optical signal, the detection sequence X carried in the second optical signal. In a specific embodiment, the optical receiving device searches the second optical signal for the boundary marker; the optical receiving device identifies, based on the found boundary marker, the start position and/or the end position of the detection sequence X carried in the second optical signal; the optical receiving device determines the detection sequence X based on the start position and/or the end position of the detection sequence X; and the optical receiving device may determine at least one detection sequence X from the second optical signal. For example, the optical receiving device identifies, based on the found boundary marker, the start position and the end position of the detection sequence X carried in the second optical signal, and the optical receiving device determines a part between the start position of the detection sequence X and the end position of the detection sequence X as the detection sequence X. For another example, the optical receiving device identifies, based on the found boundary marker, the start position of the detection sequence X carried in the second optical signal, and the optical receiving device determines a part between adjacent start positions as one detection sequence X. For still another example, the optical receiving device identifies, based on the found boundary marker, the end position of the detection sequence X carried in the second optical signal, and the optical receiving device determines a part between adjacent end positions as one detection sequence X. In an optional embodiment, in the second optical signal, the plurality of detection sequences X are periodically distributed. Therefore, after the optical receiving device determines, based on the found boundary marker, one detection sequence X carried in the second optical signal, the optical receiving device determines, based on a distribution period of the plurality of detection sequences X, other detection sequences X carried in the second optical signal. This is not limited in embodiments of this application.

In another embodiment, in the first optical signal, the adjacent detection sequences X in the plurality of detection sequences X are contiguous, and there is no boundary marker between the adjacent detection sequences X in the plurality of detection sequences X. Therefore, in the second optical signal, adjacent detection sequences X in the plurality of detection sequences X are contiguous. The optical receiving device determines, based on a characteristic of the detection sequence X, the detection sequence X carried in the second optical signal. The characteristic of the detection sequence X may be a distribution characteristic, a correlation characteristic (for example, an autocorrelation characteristic), or the like of the detection sequence X. In an implementation, the optical receiving device extracts a sequence (for example, randomly extracts the sequence) from the second optical signal based on a length of a detection sequence X pre-obtained by the optical receiving device (for example, a detection sequence X pre-negotiated between the optical sending device and the optical receiving device or a detection sequence X pre-configured in the optical receiving device). For ease of description, the sequence extracted by the optical receiving device from the second optical signal is referred to as a to-be-verified sequence, and a length of the to-be-verified sequence is equal to the length of the detection sequence X pre-obtained by the optical receiving device. The optical receiving device verifies, based on the detection sequence X pre-obtained by the optical receiving device, whether the to-be-verified sequence is the detection sequence X. When determining, through verification, that the to-be-verified sequence is the detection sequence X, the optical receiving device determines that one detection sequence X is found in the second optical signal. The optical receiving device determines, based on a distribution period of the plurality of detection sequences X, other detection sequences X carried in the second optical signal. When determining, through verification, that the to-be-verified sequence is not the detection sequence X, the optical receiving device re-extracts a to-be-verified sequence from the second optical signal, and verifies whether the re-extracted to-be-verified sequence is the detection sequence X, until the optical receiving device finds one detection sequence X from the second optical signal. In an example, the optical receiving device performs correlation calculation on the to-be-verified sequence and the pre-obtained detection sequence X, and the optical receiving device determines, based on a correlation calculation result, whether the to-be-verified sequence is the detection sequence X. In a specific embodiment, the optical receiving device performs correlation calculation on the to-be-verified sequence and the pre-obtained detection sequence X to obtain a cross-correlation curve between the to-be-verified sequence and the pre-obtained detection sequence X. The optical receiving device compares the cross-correlation curve with an autocorrelation curve of the pre-obtained detection sequence X, to determine whether the cross-correlation curve matches the autocorrelation curve of the pre-obtained detection sequence X. When determining, through comparison, that the cross-correlation curve matches the autocorrelation curve of the pre-obtained detection sequence X, the optical receiving device determines that the to-be-verified sequence is the detection sequence X. When determining, through comparison, that the cross-correlation curve does not match the autocorrelation curve of the pre-obtained detection sequence X, the optical receiving device determines that the to-be-verified sequence is not the detection sequence X. In another example, the optical receiving device compares the to-be-verified sequence with the pre-obtained detection sequence X, to determine whether the to-be-verified sequence matches the pre-obtained detection sequence X. When determining, through comparison, that the to-be-verified sequence matches the pre-obtained detection sequence X, the optical receiving device determines that the to-be-verified sequence is the detection sequence X. When determining, through comparison, that the to-be-verified sequence does not match the pre-obtained detection sequence X, the optical receiving device determines that the to-be-verified sequence is not the detection sequence X. It should be noted that, matching described in this paragraph includes but is not limited to being roughly the same or completely the same, where being roughly the same means being basically the same but allowing for a slight difference. For example, for ease of description, the cross-correlation curve between the to-be-verified sequence and the pre-obtained detection sequence X is referred to as a cross-correlation curve Q1, and the autocorrelation curve of the pre-obtained detection sequence X is referred to as an autocorrelation curve Q2. That the cross-correlation curve Q1 is roughly the same as the autocorrelation curve Q2 includes that a time-shift symbol quantity of each point on the cross-correlation curve Q1 is the same as a time-shift symbol quantity of a corresponding point on the autocorrelation curve Q2 and that a correlation value at the point on the cross-correlation curve Q1 is roughly the same as a correlation value at the corresponding point on the autocorrelation curve Q2 (for example, the correlation values are equal, or a difference between the correlation values is less than a threshold). For example, the cross-correlation curve Q1 and the autocorrelation curve Q2 each include points -m to m, a correlation value at the point -m on the cross-correlation curve Q1 is roughly the same as a correlation value at the point -m on the autocorrelation curve Q2, a correlation value at the point -m+1 on the cross-correlation curve Q1 is roughly the same as a correlation value at the point -m+1 on the autocorrelation curve Q2, a correlation value at the point -m+2 on the cross-correlation curve Q1 is roughly the same as a correlation value at the point -m+2 on the autocorrelation curve Q2, and so on. For another example, that the to-be-verified sequence matches the pre-obtained detection sequence X includes that a plurality of symbols of the to-be-verified sequence are in one-to-one correspondence with a plurality of symbols of the pre-obtained detection sequence X, and an amplitude of the symbol of the to-be-verified sequence is roughly the same as an amplitude of a corresponding symbol of the pre-obtained detection sequence X (for example, the amplitudes are equal, or a difference between the amplitudes is less than a threshold). For example, if the pre-obtained detection sequence X is 1, 1, 1, -1, 1, 1, -1, 1, 1, 1, 1, -1, -1, -1, 1, -1, and the to-be-verified sequence is 1, 1, 1, -1.2, 1, 1, -1, 1, 1.3, 1, 1, -1, -1, -1, 1, the to-be-verified sequence matches the pre-obtained detection sequence X.

In an optional embodiment, the optical receiving device converts the second optical signal into an electrical signal, and the optical receiving device demodulates the electrical signal to obtain the detection sequence X. In a specific embodiment, the optical receiving device performs optical-to-electrical conversion on the second optical signal to obtain a first electrical signal, where the first electrical signal is an analog electrical signal; the optical receiving device converts the first electrical signal into a digital electrical signal (for ease of description, the digital electrical signal is referred to as a second electrical signal); and the optical receiving device determines the detection sequence X based on the second electrical signal. In an embodiment, the second optical signal carries the plurality of periodically distributed detection sequences X, and there is the boundary marker between the adjacent detection sequences X in the plurality of detection sequences X. Therefore, the second electrical signal includes the plurality of periodically distributed detection sequences X, and there is a boundary marker between adjacent detection sequences X in the plurality of detection sequences X. The optical receiving device searches the second electrical signal for the boundary marker, the optical receiving device identifies the start position and/or the end position of the detection sequence X in the second electrical signal based on the found boundary marker, the optical receiving device determines the detection sequence X based on the start position and/or the end position of the detection sequence X, and the optical receiving device may determine the at least one detection sequence X from the second electrical signal. In another embodiment, the second optical signal carries the plurality of periodically distributed detection sequences X, and there is no boundary marker between the adjacent detection sequences X in the plurality of detection sequences X. Therefore, the second electrical signal includes the plurality of periodically distributed detection sequences X, and there is no boundary marker between adjacent detection sequences X in the plurality of detection sequences X. The optical receiving device determines the at least one detection sequence X from the second electrical signal based on the characteristic of the detection sequence X. Optionally, because the second electrical signal usually has noise, before the optical receiving device determines the detection sequence X from the second electrical signal, the optical receiving device performs noise reduction, equalization, and the like on the second electrical signal, to reduce impact of the noise on the second electrical signal. The optical receiving device determines the detection sequence X from a second electrical signal obtained through noise reduction and equalization, so that it can be avoided that the noise affects determining the detection sequence X from the second electrical signal by the optical receiving device. In this embodiment of this application, a process in which the optical receiving device determines the detection sequence X from the second electrical signal may be referred to as a synchronization process. For example, the optical receiving device includes a synchronization unit, and the synchronization unit determines the detection sequence X from the second electrical signal. This is not limited in this embodiment of this application.

In an optional embodiment, the first optical signal further carries the data signal Y. In other words, the first optical signal carries the detection sequence X and the data signal Y. For example, the first optical signal carries the data signal Y and the plurality of periodically distributed detection sequences X. Correspondingly, the second optical signal also carries the data signal Y. That the optical receiving device demodulates the second optical signal further includes: The optical receiving device filters the second optical signal to obtain a detection signal, where the detection signal includes the detection sequence X. For example, the detection signal includes the plurality of periodically distributed detection sequences X. When the second optical signal further carries the boundary marker, the detection signal further includes the boundary marker. The detection signal includes noise, and a part of the noise of the detection signal may be the data signal Y. In a specific embodiment, the optical receiving device performs optical-to-electrical conversion on the second optical signal to obtain the first electrical signal; the optical receiving device converts the first electrical signal into the digital electrical signal (namely, the second electrical signal); the optical receiving device filters the second electrical signal to obtain a filtered second electrical signal, where the filtered second electrical signal is the detection signal; and the optical receiving device determines the detection sequence X based on the filtered second electrical signal. In another specific implementation, the optical receiving device performs optical-to-electrical conversion on the second optical signal to obtain the first electrical signal; the optical receiving device filters the first electrical signal to obtain a filtered first electrical signal; the optical receiving device converts the filtered first electrical signal into the digital electrical signal (namely, the second electrical signal), where the second electrical signal is the detection signal; and the optical receiving device determines the detection sequence X based on the second electrical signal. The optical receiving device filters the first electrical signal by using an analog filter, and the optical receiving device filters the second electrical signal by using a digital filter. For example, in the first optical signal, the modulation depth of the detection sequence X is less than the modulation depth of the data signal Y, and the baud rate of the detection sequence X is less than the baud rate of the data signal Y. The filter is a low-pass filter.

S305: The optical receiving device determines the transmission performance of the optical fiber link Z based on the detection sequence X obtained by demodulating the second optical signal.

It should be noted that, when the first optical signal carries the plurality of detection sequences X, the second optical signal also carries the plurality of detection sequences X, and the optical receiving device may obtain the at least one detection sequence X by demodulating the second optical signal in S304. In S305, the optical receiving device may determine the transmission performance of the optical fiber link Z based on one or more of the at least one detection sequence X. For example, to ensure reliability of a detection result, the optical receiving device determines the transmission performance of the optical fiber link Z based on the plurality of detection sequences X obtained by demodulating the second optical signal. Implementation processes in which the optical receiving device determines the transmission performance of the optical fiber link Z based on one and the other one of any two of the plurality of detection sequences X are the same. The following provides descriptions by using an example in which the optical receiving device determines the transmission performance of the optical fiber link Z based on one detection sequence X obtained by demodulating the second optical signal. For an implementation process in which the optical receiving device determines the transmission performance of the optical fiber link Z based on each detection sequence X obtained by demodulating the second optical signal, refer to the following descriptions.

In embodiments of this application, the autocorrelation curve corresponding to the detection sequence X carried in the first optical signal that is obtained through modulation by the optical sending device satisfies the preset condition. Therefore, the optical receiving device may determine the transmission performance of the optical fiber link Z depending on whether a correlation curve corresponding to the detection sequence X obtained by demodulating the second optical signal satisfies the preset condition. The correlation curve may be an autocorrelation curve or a cross-correlation curve. An autocorrelation curve corresponding to the detection sequence X obtained through demodulation is determined based on the detection sequence X obtained through demodulation. A cross-correlation curve corresponding to the detection sequence X obtained through demodulation is determined based on the detection sequence obtained through demodulation and the detection sequence X pre-obtained by the optical receiving device. The detection sequence X pre-obtained by the optical receiving device is a detection sequence X pre-obtained by the optical receiving device and carried in the first optical signal that is obtained through modulation by the optical sending device. The detection sequence X pre-obtained by the optical receiving device may be pre-negotiated between the optical sending device and the optical receiving device, or may be pre-configured in the optical receiving device. The cross-correlation curve determined based on the detection sequence X obtained through demodulation and the pre-obtained detection sequence X may also be considered as the autocorrelation curve of the detection sequence X.

In a specific embodiment, the optical receiving device obtains the correlation curve (the autocorrelation curve or the cross-correlation curve) corresponding to the detection sequence X obtained by demodulating the second optical signal. The optical receiving device determines whether the correlation curve (the autocorrelation curve or the cross-correlation curve) satisfies the preset condition. When the optical receiving device determines that the correlation curve satisfies the preset condition, the optical receiving device determines that the optical fiber link Z is not faulty. When the optical receiving device determines that the correlation curve does not satisfy the preset condition, the optical receiving device determines that the optical fiber link Z is faulty.

In an optional embodiment, that the autocorrelation curve corresponding to the detection sequence X carried in the first optical signal that is obtained through modulation by the optical sending device satisfies the preset condition includes: The autocorrelation curve corresponding to the detection sequence X has one characteristic peak. The optical receiving device determines the transmission performance of the optical fiber link Z based on a characteristic peak of the correlation curve (the autocorrelation curve or the cross-correlation curve) corresponding to the detection sequence X obtained by demodulating the second optical signal. In a specific embodiment, the optical receiving device determines, based on the characteristic peak of the correlation curve corresponding to the detection sequence X obtained by demodulating the second optical signal, whether the optical fiber link Z is faulty. In an embodiment, that the correlation curve corresponding to the detection sequence X carried in the first optical signal that is obtained through modulation by the optical sending device satisfies the preset condition includes: The autocorrelation curve corresponding to the detection sequence X has only one characteristic peak, and the autocorrelation value at each point on the autocorrelation curve corresponding to the detection sequence X other than the characteristic peak is 0. The optical receiving device determines a quantity of characteristic peaks on the correlation curve corresponding to the detection sequence X obtained by demodulating the second optical signal. When the optical receiving device determines that the correlation curve corresponding to the detection sequence X obtained by demodulating the second optical signal has only one characteristic peak, the optical receiving device determines that the optical fiber link Z is not faulty. When the optical receiving device determines that the correlation curve corresponding to the detection sequence X obtained by demodulating the second optical signal has a plurality of characteristic peaks, the optical receiving device determines that the optical fiber link is faulty.

In an optional embodiment, when the optical receiving device determines that the correlation curve corresponding to the detection sequence X obtained by demodulating the second optical signal has the plurality of characteristic peaks, the optical receiving device determines a fault point on the optical fiber link Z based on a main peak and a secondary peak among the plurality of characteristic peaks. The plurality of characteristic peaks include one main peak and at least one secondary peak, and a peak value of the at least one secondary peak is less than a peak value of the main peak. Each of the at least one secondary peak corresponds to two reflection points on the optical fiber link Z, and at least one of the two reflection points is a fault point. In addition, parts of reflection points corresponding to different secondary peaks may be the same or different. For example, if a secondary peak 1 corresponds to a reflection point 1 and a reflection point 2, and a secondary peak 2 corresponds to the reflection point 1 and a reflection point 3, a part of the reflection points corresponding to the secondary peak 1 and a part of the reflection points corresponding to the secondary peak 2 are the same.

In a specific embodiment, a horizontal axis of the correlation curve corresponding to the detection sequence X obtained by demodulating the second optical signal represents a time shift symbol quantity. When the correlation curve includes the main peak and the at least one secondary peak, for each of the at least one secondary peak, the optical receiving device determines a difference between a time shift symbol quantity corresponding to the secondary peak and a time shift symbol quantity corresponding to the main peak (for ease of description, the difference is referred to as a time shift symbol difference corresponding to the secondary peak). The optical receiving device determines, based on the time shift symbol difference corresponding to the secondary peak and the baud rate of the detection sequence X carried in the first optical signal that is obtained through modulation by the optical sending device, transmission duration of a reflected signal between the two reflection points corresponding to the secondary peak. The optical receiving device determines, based on the transmission duration, a distance between the two reflection points, corresponding to the secondary peak, that are on the optical fiber link Z, thereby determining the fault point on the optical fiber link Z based on the distance between the two reflection points. For example, a poor contact is caused by contamination of an end face of the connector on the optical fiber link, looseness of the connector, or the like. Consequently, an optical signal may be greatly reflected at the connector. A reflection point on the optical fiber link Z is usually located at a position of the connector. The optical receiving device may determine, based on the distance between the two reflection points corresponding to the secondary peak in combination with a deployment status of the optical fiber link Z, the fault point that is on the optical fiber link Z.

The time shift symbol difference corresponding to the secondary peak may be a positive value, or may be a negative value. The positive value represents that a signal of a detection sequence in a current period is reflected by the reflection points corresponding to the secondary peak, and the negative value represents that a signal of a detection sequence in a previous period is reflected by the reflection points corresponding to the secondary peak, and is delayed to a signal of the detection sequence in the current period. When the time shift symbol difference corresponding to the secondary peak is the positive value, the optical receiving device determines a product of the time shift symbol difference corresponding to the secondary peak and a symbol period (namely, a reciprocal of the baud rate) of the detection sequence X carried in the first optical signal that is obtained through modulation by the optical sending device as the transmission duration of the reflected signal between the two reflection points corresponding to the secondary peak. When the time shift symbol difference corresponding to the secondary peak is the negative value, the optical receiving device determines a sum of the time shift symbol difference corresponding to the secondary peak and a length of a target sequence, the optical receiving device determines the sum of the time shift symbol difference corresponding to the secondary peak and the length of the target sequence as a delay symbol quantity corresponding to the secondary peak, and the optical receiving device determines a product of the delay symbol quantity corresponding to the secondary peak and a symbol period (namely, a reciprocal of the baud rate) of the detection sequence X carried in the first optical signal that is obtained through modulation by the optical sending device as the transmission duration of the reflected signal between the two reflection points corresponding to the secondary peak. The target sequence is a sequence used in a process of obtaining the correlation curve corresponding to the detection sequence X obtained through demodulation, and the target sequence may be a first sequence, a second sequence, or the detection sequence X.

For example, for each of the at least one secondary peak, the optical receiving device determines, by using a distance-time formula and based on the transmission duration of the reflected signal between the two reflection points corresponding to the secondary peak, the distance between the two reflection points that correspond to the secondary peak and that are on the optical fiber link Z. For example, the distance-time formula is D=v*T/2. v represents a transmission speed of the first optical signal over the optical fiber link Z, T represents the transmission duration of the reflected signal between the two reflection points corresponding to the secondary peak, D represents the distance between the two reflection points corresponding to the secondary peak, the symbol "*" represents a multiplication sign, and the symbol "/" represents a division sign. In an optional embodiment, the end face of the laser of the optical sending device has a strong reflection capability. It may be considered that the end face of the laser of the optical sending device is a fixed reflection point. In this case, "D" in the distance-time formula represents a distance between a fault point (a fault point corresponding to the secondary peak) on the optical fiber link Z and the optical sending device (specifically, a distance between the fault point corresponding to the secondary peak and the end face of the laser of the optical sending device). The optical receiving device determines the distance between the two reflection points corresponding to the secondary peak, that is, determines the distance between the fault point corresponding to the secondary peak and the end face of the laser of the optical sending device, that is, determines a position of the fault point corresponding to the secondary peak.

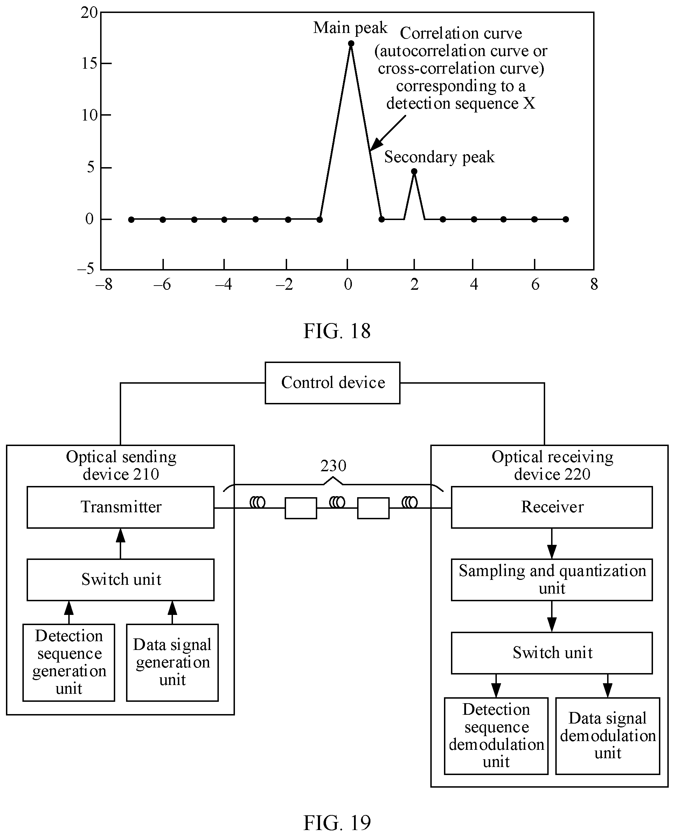

In an example, FIG. 18 is a diagram of a correlation curve corresponding to a detection sequence X obtained by demodulating a second optical signal by an optical receiving device. The correlation curve may be the autocorrelation curve corresponding to the detection sequence X obtained by demodulating the second optical signal, or may be the cross-correlation curve determined based on the detection sequence X obtained by demodulating the second optical signal and the detection sequence X pre-obtained by the optical receiving device. Refer to FIG. 18. The correlation curve has two characteristic peaks, and a correlation value at each point on the correlation curve other than the two characteristic peaks is 0 (FIG. 18 is merely used as an example. During actual application, due to impact of random noise, an autocorrelation value at each point on the correlation curve other than a characteristic peak is a quite low noise floor. That is, a correlation value at each point on the correlation curve other than the characteristic peak is quite small, but may not be 0). It is assumed that it is known that the end face of the laser of the optical sending device has the strong reflection capability, and is the fixed reflection point. Therefore, the optical receiving device determines, based on the characteristic peaks of the correlation curve, that the optical fiber link Z is faulty. Further, the two characteristic peaks include one main peak and one secondary peak, a time shift symbol quantity corresponding to the main peak is 0, and a time shift symbol quantity corresponding to the secondary peak is 2. Therefore, the optical receiving device determines that a time shift symbol difference corresponding to the secondary peak is 2 (2-0=2). The optical receiving device determines a product of the time shift symbol difference corresponding to the secondary peak and the symbol period of the detection sequence X carried in the first optical signal that is obtained through modulation by the optical sending device as transmission duration of a reflected signal between two reflection points (the end face of the laser of the optical sending device and a fault point) corresponding to the secondary peak. The optical receiving device determines, by using the foregoing distance-time formula and based on the transmission duration, a distance between the two reflection points corresponding to the secondary peak. Further, the optical receiving device determines, based on the distance between the two reflection points and a known position of the end face of the laser of the optical sending device, the fault point that corresponds to the secondary peak and that is on the optical fiber link Z.

In an optional embodiment, when the optical receiving device determines that the correlation curve corresponding to the detection sequence X obtained by demodulating the second optical signal has the plurality of characteristic peaks, the optical receiving device further determines, based on an amplitude of each secondary peak among the plurality of characteristic peaks, strength of a reflection degree of reflection points (including a fault point) corresponding to the secondary peak. For example, a vertical axis of the correlation curve corresponding to the detection sequence X represents a correlation (namely, a correlation value), and the amplitude of the secondary peak is for reflecting the strength of the reflection degree of the reflection points (including the fault point) corresponding to the secondary peak. The amplitude of the secondary peak is positively correlated with the strength of the reflection degree of the reflection points corresponding to the secondary peak. A larger amplitude of the secondary peak indicates a higher reflection degree of the reflection points (including the fault point) corresponding to the secondary peak. A smaller amplitude of the secondary peak indicates a lower reflection degree of the reflection points (including the fault point) corresponding to the secondary peak. The strength of the reflection degree is also referred to as reflection strength.

In this embodiment of this application, the optical receiving device may not only determine, based on the correlation curve corresponding to the detection sequence X obtained by demodulating the second optical signal, whether the optical fiber link Z is faulty, but also determine, when determining that the optical fiber link Z is faulty, the fault point on the optical fiber link Z based on the characteristic peak on the correlation curve, to perform fault diagnosis on the optical fiber link Z. Therefore, in embodiments of this application, during fault diagnosis, it is unnecessary for a staff member to carry an instrument to a site for diagnosis, simplifying an implementation process. In addition, when determining that the optical fiber link Z is faulty, the optical receiving device may further determine, based on the amplitude of the secondary peak of the correlation curve, the strength of the reflection degree of the reflection points (including the fault point) corresponding to the secondary peak, to qualitatively determine a faulty degree of the fault point.

In an optional embodiment, the correlation curve corresponding to the detection sequence X obtained by demodulating the second optical signal may be the autocorrelation curve or the cross-correlation curve. The autocorrelation curve corresponding to the detection sequence X obtained through demodulation is determined based on the detection sequence X obtained through demodulation. The cross-correlation curve corresponding to the detection sequence X obtained through demodulation is determined based on the detection sequence obtained through demodulation and the detection sequence X pre-obtained by the optical receiving device. The detection sequence X pre-obtained by the optical receiving device is the detection sequence X pre-obtained by the optical receiving device, and carried in the second optical signal that is obtained through modulation by the optical sending device.

In an embodiment, the correlation curve corresponding to the detection sequence X obtained by demodulating the second optical signal is an autocorrelation curve, and the optical receiving device determines the autocorrelation curve based on the detection sequence X obtained through demodulation. In a specific embodiment, the detection sequence X carried in the first optical signal that is obtained through modulation by the optical sending device is the Golay complementary sequence or the pseudo random binary sequence, and the detection sequence X includes the first sequence A and the second sequence B. After the optical receiving device obtains the detection sequence X by demodulating the second optical signal, the optical receiving device determines the first sequence A and the second sequence B from the detection sequence X obtained through demodulation, and the optical receiving device determines, based on the first sequence A and the second sequence B that are determined from the detection sequence X obtained through demodulation, the autocorrelation curve corresponding to the detection sequence X obtained through demodulation. For example, in the detection sequence X, the second sequence B is located after the first sequence A, the second sequence B is adjacent to the first sequence A, and the lengths of the first sequence A and the second sequence B are both the fixed lengths. For example, the length of the first sequence A is a first length, and the length of the second sequence B is a second length. The optical receiving device determines, as the first sequence A, a sequence that starts from the start position of the detection sequence X obtained through demodulation and has a length of the first length, and the optical receiving device determines, as the second sequence B, a sequence in the detection sequence X obtained through demodulation other than the first sequence A. It should be noted that a first sequence A in subsequent descriptions of this paragraph is the first sequence A determined from the detection sequence X obtained through demodulation, and a second sequence B in the subsequent descriptions of this paragraph is the second sequence B determined from the detection sequence X obtained through demodulation. In an embodiment, the optical receiving device performs autocorrelation calculation on the first sequence A to obtain the autocorrelation curve of the first sequence A; the optical receiving device performs autocorrelation calculation on the second sequence B to obtain the autocorrelation curve of the second sequence B; and the optical receiving device determines, based on the autocorrelation curve of the first sequence A and the autocorrelation curve of the second sequence B, the autocorrelation curve corresponding to the detection sequence X obtained through demodulation. In a specific embodiment, the points on the autocorrelation curve of the first sequence A are in one-to-one correspondence with the points on the autocorrelation curve of the second sequence B. The optical receiving device correspondingly adds amplitudes on the autocorrelation curve of the first sequence A and amplitudes on the autocorrelation curve of the second sequence B based on the points. The optical receiving device draws a curve based on added amplitudes, to obtain the autocorrelation curve corresponding to the detection sequence X obtained through demodulation. In an example, both the autocorrelation curve of the first sequence A and the autocorrelation curve of the second sequence B include the points -m to m, where m is a positive integer. The points - m to m on the autocorrelation curve of the first sequence A are in one-to-one correspondence with the points -m to m on the autocorrelation curve of the second sequence B. The optical receiving device adds an amplitude corresponding to the point -m on the autocorrelation curve of the first sequence A and an amplitude corresponding to the point -m on the autocorrelation curve of the second sequence B, to obtain a superposed amplitude corresponding to the point -m. The optical receiving device adds an amplitude corresponding to the point -m+1 on the autocorrelation curve of the first sequence A and an amplitude corresponding to the point -m+1 on the autocorrelation curve of the second sequence B, to obtain a superposed amplitude corresponding to the point - m+1. The optical receiving device adds an amplitude corresponding to the point -m+2 on the autocorrelation curve of the first sequence A and an amplitude corresponding to the point -m+2 on the autocorrelation curve of the second sequence B, to obtain a superposed amplitude corresponding to the point -m+2. By analogy, the optical receiving device may determine superposed amplitudes in one-to-one correspondence with the points -m to m. The optical receiving device draws a curve based on the points -m to m and the superposed amplitudes that are in one-to-one correspondence with the points -m to m. The curve drawn by the optical receiving device is the autocorrelation curve corresponding to the detection sequence X obtained by demodulating the second optical signal. For this embodiment, the target sequence in the foregoing embodiment may be the first sequence A or the second sequence B.

In another embodiment, the correlation curve corresponding to the detection sequence X obtained by demodulating the second optical signal is a cross-correlation curve. The optical receiving device determines the cross-correlation curve based on the detection sequence X obtained through demodulation and the detection sequence X pre-obtained by the optical receiving device. In a specific embodiment, the detection sequence X carried in the first optical signal that is obtained through modulation by the optical sending device is the Golay complementary sequence or the pseudo random binary sequence, and the detection sequence X includes the first sequence A and the second sequence B. After the optical receiving device obtains the detection sequence X by demodulating the second optical signal, the optical receiving device determines the first sequence A and the second sequence B from the detection sequence X obtained through demodulation, and the optical receiving device determines a first sequence and a second sequence from the pre-obtained detection sequence X. For ease of description, the first sequence determined by the optical receiving device from the pre-obtained detection sequence X is referred to as a first sequence A', and the second sequence determined by the optical receiving device from the pre-obtained detection sequence X is referred to as a second sequence B'. The optical receiving device determines, based on the first sequence A and the second sequence B that are determined from the detection sequence X obtained through demodulation and the first sequence A' and the second sequence B' that are determined from the pre-obtained detection sequence X, the cross-correlation curve corresponding to the detection sequence X obtained through demodulation. For example, in the detection sequence X, the second sequence B is located after the first sequence A, the second sequence B is adjacent to the first sequence A, and the lengths of the first sequence A and the second sequence B are both the fixed lengths. For example, the length of the first sequence A is a first length, and the length of the second sequence B is a second length. The optical receiving device determines, as the first sequence A, a sequence that starts from the start position of the detection sequence X obtained through demodulation and has a length of the first length, and the optical receiving device determines, as the second sequence B, a sequence in the detection sequence X obtained through demodulation other than the first sequence A. The optical receiving device determines, as the first sequence A', a sequence that starts from the start position of the pre-obtained detection sequence X and has a length of the first length, and the optical receiving device determines, as the second sequence B', a sequence in the pre-obtained detection sequence X other than the first sequence A'. It should be noted that a first sequence A in subsequent descriptions of this paragraph is the first sequence A determined from the detection sequence X obtained through demodulation, and a second sequence B in the subsequent descriptions of this paragraph is the second sequence B determined from the detection sequence X obtained through demodulation. In an embodiment, the optical receiving device performs cross-correlation calculation on the first sequence A and the first sequence A' to obtain a cross-correlation curve between the first sequence A and the first sequence A'; the optical receiving device performs cross-correlation calculation on the second sequence B and the second sequence B' to obtain a cross-correlation curve between the second sequence B and the second sequence B'; and the optical receiving device determines, based on the cross-correlation curve between the first sequence A and the first sequence A' and the cross-correlation curve between the second sequence B and the second sequence B', the cross-correlation curve corresponding to the detection sequence X obtained through demodulation. For example, the cross-correlation curve between the first sequence A and the first sequence A' is referred to as a cross-correlation curve 1, the cross-correlation curve between the second sequence B and the second sequence B' is referred to as a cross-correlation curve 2, and the cross-correlation curve corresponding to the detection sequence X obtained through demodulation is a superposition curve of the cross-correlation curve 1 and the cross-correlation curve 2. In a specific embodiment, points on the cross-correlation curve 1 are in one-to-one correspondence with points on the cross-correlation curve 2. The optical receiving device correspondingly adds amplitudes on the cross-correlation curve 1 and amplitudes on the cross-correlation curve 2 based on the points. The optical receiving device draws a curve based on the added amplitudes, to obtain the cross-correlation curve corresponding to the detection sequence X obtained through demodulation. In an example, both the cross-correlation curve 1 and the cross-correlation curve 2 include the points -m to m, where m is a positive integer. The points -m to m on the cross-correlation curve 1 are in one-to-one correspondence with the points -m to m on the cross-correlation curve 2. The optical receiving device adds an amplitude corresponding to the point -m on the cross-correlation curve 1 and an amplitude corresponding to the point -m on the cross-correlation curve 2, to obtain a superposed amplitude corresponding to the point -m. The optical receiving device adds an amplitude corresponding to the point -m+1 on the cross-correlation curve 1 and an amplitude corresponding to the point -m+1 on the cross-correlation curve 2, to obtain a superposed amplitude corresponding to the point -m+1. The optical receiving device adds an amplitude corresponding to the point - m+2 on the cross-correlation curve and an amplitude corresponding to the point -m+2 on the cross-correlation curve 2, to obtain a superposed amplitude corresponding to the point -m+2. By analogy, the optical receiving device may determine superposed amplitudes in one-to-one correspondence with the points -m to m. The optical receiving device draws a curve based on the points -m to m and the superposed amplitudes that are in one-to-one correspondence with the points -m to m. The curve drawn by the optical receiving device is the cross-correlation curve corresponding to the detection sequence X obtained through demodulation. For this embodiment, the target sequence in the foregoing embodiment may be the first sequence A, the second sequence B, the first sequence A', or the second sequence B'.

In still another embodiment, the correlation curve corresponding to the detection sequence X obtained by demodulating the second optical signal is the autocorrelation curve of the detection sequence X obtained through demodulation, and the detection sequence X may be the pseudo random binary sequence. After the optical receiving device obtains the detection sequence X by demodulating the second optical signal, the optical receiving device performs autocorrelation calculation on the detection sequence X obtained through demodulation to obtain the autocorrelation curve of the detection sequence X obtained through demodulation. For this embodiment, the target sequence in the foregoing embodiment may be the detection sequence X obtained through demodulation.

In yet another embodiment, the correlation curve corresponding to the detection sequence X obtained by demodulating the second optical signal is the cross-correlation curve between the detection sequence X obtained through demodulation and the pre-obtained detection sequence X, and the detection sequence X may be the pseudo random binary sequence. After the optical receiving device obtains the detection sequence X by demodulating the second optical signal, the optical receiving device performs cross-correlation calculation on the detection sequence X obtained through demodulation and the detection sequence X pre-obtained by the optical receiving device, to obtain the cross-correlation curve between the detection sequence X obtained through demodulation and the pre-obtained detection sequence X. For this embodiment, the target sequence in the foregoing embodiment may be the detection sequence X obtained through demodulation or the pre-obtained detection sequence X.

For ease of understanding an implementation process of S305, the following describes an implementation principle of S305.

For example, the first optical signal carries the plurality of detection sequences X, the plurality of detection sequences X are periodically distributed, each of the plurality of detection sequences X includes the first sequence A and the second sequence B, the second sequence B is located after the first sequence A, and the second sequence B is adjacent to the first sequence A. For ease of description, an example in which the optical sending device obtains the first optical signal through modulation by using a detection signal is used for description. The detection signal includes a plurality of detection sequences X. For example, the detection signal consists of the plurality of detection sequences X. For example, the detection signal carried in the first optical signal that is obtained through modulation by the optical sending device is Patt_{detect-}Tx=[A B A B A B ... ...].Patt_{detect-}Tx represents the detection signal carried in the first optical signal that is obtained through modulation by the optical sending device, "A" represents the first sequence A, and "B" represents the second sequence B. When attenuation, a fault, and the like of the optical fiber link Z are not considered, a detection signal obtained by demodulating the second optical signal by the optical receiving device is Patt_{detect-}Rx =[ A B A B A B ... ... ]. Patt_{detect-}Rx represents the detection signal obtained by demodulating the second optical signal by the optical receiving device. It can be learned that, when the attenuation, the fault, and the like of the optical fiber link Z are not considered, the detection signal obtained by demodulating the second optical signal by the optical receiving device is the same as the detection signal carried in the second optical signal that is obtained through modulation by the optical sending device.

However, the optical fiber link Z inevitably has cases such as the attenuation and the fault. A detection signal actually obtained by demodulating the second optical signal by the optical receiving device includes noise (that is, a reflected optical signal) caused by reflection by reflection points, and the reflected optical signal may be represented as Data_Per = β ∗ Patt_{detect-}Tx(t- t0). Data_Per represents the reflected optical signal, t0 represents delay time of the reflected optical signal relative to the detection signal, and β represents an attenuation coefficient of the reflected optical signal (the reflected optical signal is formed because the reflection points on the optical fiber link Z reflect the detection signal a plurality of times, and β is the attenuation coefficient caused by the plurality of reflections). If there are a plurality of reflection points on the optical fiber link Z, there may be a plurality of items on the right of the expression of the reflected optical signal, and a reflected optical signal represented by each item has different delay time relative to the detection signal, and may have a different attenuation coefficient. Therefore, the detection signal actually obtained by demodulating the second optical signal by the optical receiving device is Patt_{detect-}Rx=Patt_{detect-}Tx+Data_Per.

In this embodiment of this application, the optical receiving device determines the detection sequence X from the detection signal obtained through demodulation, and the optical receiving device obtains the correlation curve corresponding to the detection sequence X obtained through demodulation. When the detection sequence X obtained through demodulation does not include the noise, the correlation curve corresponding to the detection sequence X obtained through demodulation may be the autocorrelation curve shown in FIG. 7. The correlation curve has one characteristic peak, and an amplitude of each point on the correlation curve other than the characteristic peak is 0. However, when the detection sequence X obtained through demodulation includes the noise caused by reflection by the reflection point, the correlation curve corresponding to the detection sequence X obtained through demodulation may be shown in FIG. 18. The correlation curve not only has a characteristic peak (a main peak) similar to that shown in FIG. 7, but also has one secondary peak. The secondary peak is generated due to superposition of an autocorrelation of a first half part (corresponding to the first sequence A) of the reflected optical signal Data_Per and an autocorrelation of a second half part (corresponding to the second sequence B), or superposition of a cross-correlation between a first half part (corresponding to the first sequence A) of Data_Per and a first half part (corresponding to the first sequence A') of the pre-obtained detection sequence X and a cross-correlation between a second half part (corresponding to the second sequence B) of Data_Per and a first half part (corresponding to the second sequence B') of the pre-obtained detection sequence X. Therefore, the transmission duration of the reflected signal between the two reflection points corresponding to the secondary peak may be determined based on the difference between the time shift symbol quantity corresponding to the main peak and the time shift symbol quantity corresponding to the secondary peak, and the reflection point (fault point), corresponding to the secondary peak, on the optical fiber link Z is determined based on the transmission duration, thereby implementing fault diagnosis.

In an optional embodiment, after the optical receiving device determines the transmission performance of the optical fiber link based on the detection sequence X obtained by demodulating the second optical signal, for example, after the optical receiving device determines that a fault exists on the optical fiber link, the optical receiving device may perform fault warning. In an example, the optical receiving device controls an indicator of the optical receiving device to blink, emit light, or the like to perform fault warning. In another example, the optical receiving device outputs warning information to a device having a display component and/or a voice broadcasting component, to perform fault warning. The device having the display component and/or the voice broadcast component may present the warning information in a display or voice broadcast manner, to perform fault warning. This is not limited in embodiments of this application.

It should be noted that the optical sending device and the optical receiving device may each include an optical module and/or an optical line card. In the descriptions of the embodiment shown in FIG. 3, all or some operations performed by the optical sending device are performed by the optical module and/or the optical line card in the optical sending device, and all or some operations performed by the optical receiving device are performed by the optical module and/or the optical line card in the optical receiving device. For example, the optical sending device includes the optical module or the optical line card, and the light source, the modulator, and the like are all located on the optical module or the optical line card. The optical receiving device includes the optical module or the optical line card, and the filter is located on the optical module or the optical line card.

In conclusion, according to the method for detecting the optical fiber link provided in this embodiment of this application, the optical sending device sends, to the optical receiving device over the optical fiber link, the optical signal that carries the detection sequence, and the optical receiving device determines the transmission performance of the optical fiber link based on the detection sequence carried in the optical signal received over the optical fiber link, thereby detecting the optical fiber link. It can be learned that embodiments of this application provide a transmissive detection solution. The existing optical sending device and optical receiving device in an optical fiber communication system are leveraged to detect the transmission performance of the optical fiber link, eliminating the need for additional devices such as an OTDR and a circulator (or a power splitter) and optical fiber plugging and unplugging. Therefore, hardware implementation for optical fiber link detection is simplified, detection costs are reduced, in-line detection can be implemented, and fault diagnosis can be implemented. During fault diagnosis, it is unnecessary for a staff member to carry an instrument to a site for diagnosis, thereby simplifying an implementation process, and reducing detection labor costs.

It can be learned from the descriptions of the foregoing embodiments that, in embodiments of this application, the transmission performance of the optical fiber link may be detected in an in-band detection manner, or the transmission performance of the optical fiber link may be detected in an out-of-band detection manner. The in-band detection manner is also referred to as an in-line detection manner, and means that a detection sequence and a data signal are carried in a same optical signal and sent over an optical fiber link, so as to detect transmission performance of the optical fiber link based on the detection sequence. The out-of-band detection manner means that a detection sequence is carried in an independent optical signal and sent over an optical fiber link, to detect transmission performance of the optical fiber link based on the detection sequence, in other words, the detection sequence and a data signal are carried in different optical signals. In an optional embodiment, the optical sending device includes a switch unit. The switch unit is configured to switch between a data signal and a detection sequence, so that the optical sending device modulates an optical signal by using the detection sequence or the data signal. For example, in a detection mode, the optical sending device modulates the optical signal by using the detection sequence; or in a non-detection mode, the optical sending device modulates the optical signal by using the data signal. The optical receiving device may also include a switch unit. The switch unit is configured to switch between a data signal and a detection sequence, so that the optical receiving device demodulates an optical signal to obtain the detection sequence or the data signal. For example, in the detection mode, the optical receiving device demodulates the optical signal to obtain the detection sequence; or in the non-detection mode, the optical receiving device demodulates the optical signal to obtain the data signal. An operating process of the switch unit may be controlled by a control device, and the optical sending device and the optical receiving device may be separately connected to the control device. This is not limited in embodiments of this application.

For ease of understanding the technical solutions in embodiments of this application, the following describes the technical solutions in embodiments of this application by using two specific examples.

FIG. 19 is a diagram of a method for detecting an optical fiber link according to an embodiment of this application. FIG. 19 is described by using an example in which the optical fiber link is detected in an out-of-band detection manner. As shown in FIG. 19, an optical sending device 210 and an optical receiving device 220 are separately connected to a control device.

As shown in FIG. 19, the optical sending device 210 includes a transmitter, a switch unit, a detection sequence generation unit, and a data signal generation unit. The transmitter, the detection sequence generation unit, and the data signal generation unit are separately connected to the switch unit. The optical receiving device 220 includes a receiver, a sampling and quantization unit, a switch unit, a detection sequence demodulation unit, and a data signal demodulation unit. The receiver, the sampling and quantization unit, and the switch unit are sequentially connected, and the detection sequence demodulation unit and the data signal demodulation unit are separately connected to the switch unit. The transmitter is connected to the receiver over an optical fiber link 230, so that the optical sending device 210 is connected to the optical receiving device 220 over the optical fiber link 230. For example, the optical sending device 210 and the optical receiving device 220 each include an optical module (not shown in FIG. 19). The optical module in the optical sending device 210 includes the transmitter, the switch unit, the detection sequence generation unit, and the data signal generation unit. The optical module in the optical receiving device 220 includes the receiver, the sampling and quantization unit, the switch unit, the detection sequence demodulation unit, and the data signal demodulation unit.

The control device is configured to control the optical sending device 210 and the optical receiving device 220 to separately enter a detection mode or a non-detection mode. After the optical sending device 210 and the optical receiving device 220 enter the detection mode, the optical sending device 210 cooperates with the optical receiving device 220 to detect transmission performance of the optical fiber link 230. After the optical sending device 210 and the optical receiving device 220 enter the non-detection mode, the optical sending device 210 performs data communication with the optical receiving device 220. Specifically, the control device controls the switch unit in the optical sending device 210 to connect the detection sequence generation unit and the transmitter, so as to control the optical sending device 210 to enter the detection mode; and the control device controls the switch unit in the optical receiving device 220 to connect the sampling and quantization unit and the detection sequence demodulation unit, so as to control the optical receiving device 220 to enter the detection mode. The control device controls the switch unit in the optical sending device 210 to connect the data signal generation unit and the transmitter, so as to control the optical sending device 210 to enter the non-detection mode; and the control device controls the switch unit in the optical receiving device 220 to connect the sampling and quantization unit and the data signal demodulation unit, so as to control the optical receiving device 220 to enter the non-detection mode.

In the optical sending device 210, the detection sequence generation unit is configured to generate a detection sequence, the data signal generation unit is configured to generate a data signal, and the switch unit is configured to control the detection sequence generation unit or the data signal generation unit to be connected to the transmitter. When the detection sequence generation unit is connected to the transmitter, the optical sending device 210 is in the detection mode, and the transmitter modulates an optical signal by using the detection sequence generated by the detection sequence generation unit, and sends, over the optical fiber link 230, an optical signal that carries the detection sequence. When the data signal generation unit is connected to the transmitter, the optical sending device 210 is in the non-detection mode, and the transmitter modulates an optical signal by using the data signal generated by the data signal generation unit, and sends, over the optical fiber link 230, an optical signal that carries the data signal. In the optical receiving device 220, the receiver is configured to: receive an optical signal over the optical fiber link 230 and convert the optical signal into an analog electrical signal, the sampling and quantization unit is configured to sample and quantify the analog electrical signal to obtain a digital electrical signal, and the switch unit is configured to control the detection sequence demodulation unit or the data signal demodulation unit to be connected to the sampling and quantization unit. When the detection sequence demodulation unit is connected to the sampling and quantization unit, the optical receiving device 220 is in the detection mode. The detection sequence demodulation unit demodulates the digital electrical signal to obtain a detection sequence, and determines the transmission performance of the optical fiber link 230 based on the detection sequence. When the data signal demodulation unit is connected to the sampling and quantization unit, the optical receiving device 220 is in the non-detection mode, and the data signal demodulation unit demodulates the digital electrical signal to obtain a data signal.

In an example, both the optical sending device 210 and the optical receiving device 220 are in the detection mode, the transmitter modulates the optical signal by using the detection sequence generated by the detection sequence generation unit, to obtain the optical signal that carries the detection sequence, and the transmitter sends the optical signal over the optical fiber link 230. The receiver receives, over the optical fiber link 230, the optical signal that carries the detection sequence, and the receiver converts the optical signal into an analog electrical signal. The sampling and quantization unit samples and quantifies the analog electrical signal to obtain a digital electrical signal. The detection sequence demodulation unit demodulates the digital electrical signal to obtain the detection sequence, and the detection sequence demodulation unit determines the transmission performance of the optical fiber link 230 based on the detection sequence.

In another example, both the optical sending device 210 and the optical receiving device 220 are in the non-detection mode, the transmitter modulates the optical signal by using the data signal generated by the data signal generation unit, to obtain the optical signal that carries the data signal, and the transmitter sends the optical signal over the optical fiber link 230. The receiver receives, over the optical fiber link 230, the optical signal that carries the data signal, and the receiver converts the optical signal into an analog electrical signal. The sampling and quantization unit samples and quantifies the analog electrical signal to obtain a digital electrical signal. The data signal demodulation unit demodulates the digital electrical signal to obtain the data signal.

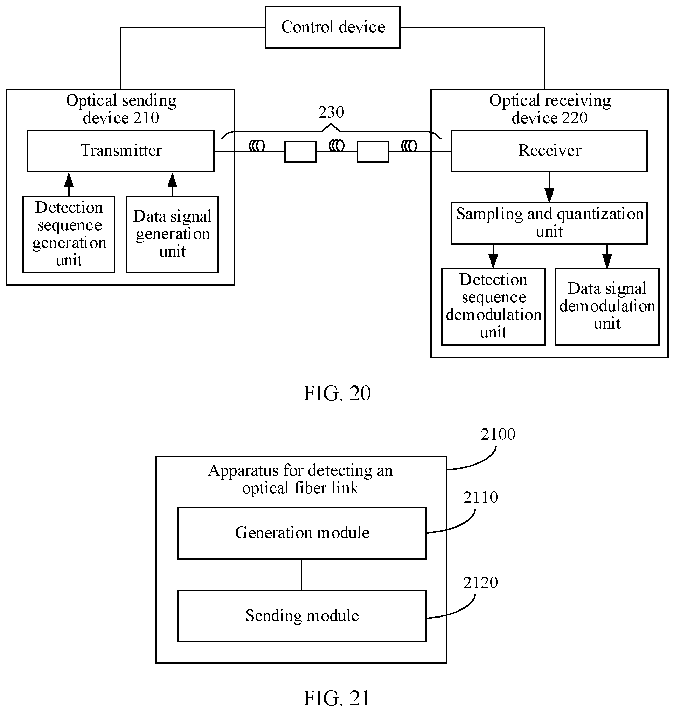

FIG. 20 is a diagram of another method for detecting an optical fiber link according to an embodiment of this application. FIG. 20 is described by using an example in which the optical fiber link is detected in an in-band detection manner. As shown in FIG. 20, an optical sending device 210 and an optical receiving device 220 are separately connected to a control device.

As shown in FIG. 20, the optical sending device 210 includes a transmitter, a detection sequence generation unit, and a data signal generation unit. The detection sequence generation unit and the data signal generation unit are separately connected to the transmitter. The optical receiving device 220 includes a receiver, a sampling and quantization unit, a detection sequence demodulation unit, and a data signal demodulation unit. The receiver, the detection sequence demodulation unit, and the data signal demodulation unit are separately connected to the sampling and quantization unit. The transmitter is connected to the receiver over an optical fiber link 230, so that the optical sending device 210 is connected to the optical receiving device 220 over the optical fiber link 230. For example, the optical sending device 210 and the optical receiving device 220 each include an optical module (not shown in FIG. 20). The optical module in the optical sending device 210 includes the transmitter, the detection sequence generation unit, and the data signal generation unit. The optical module in the optical receiving device 220 includes the receiver, the sampling and quantization unit, the detection sequence demodulation unit, and the data signal demodulation unit.

The control device is configured to control the optical sending device 210 and the optical receiving device 220 to separately enter a detection mode or a non-detection mode. After the optical sending device 210 and the optical receiving device 220 separately enter the detection mode, the optical sending device 210 cooperates with the optical receiving device 220 to detect transmission performance of the optical fiber link 230, and the optical sending device 210 performs data communication with the optical receiving device 220. After the optical sending device 210 and the optical receiving device 220 separately enter the non-detection mode, the optical sending device 210 performs data communication with the optical receiving device 220. For example, the control device controls the transmitter to modulate an optical signal by using a detection sequence, so as to control the optical sending device 210 to enter the detection mode; and the control device controls the detection sequence demodulation unit in the optical receiving device 220 to obtain, through demodulation, the detection sequence carried in an optical signal, so as to control the optical receiving device 220 to enter the detection mode. The control device controls the transmitter not to modulate an optical signal by using the detection sequence, so as to control the optical sending device 210 to enter the non-detection mode; and the control device controls the data signal demodulation unit in the optical receiving device 220 not to obtain, through demodulation, the detection sequence carried in an optical signal, so as to control the optical receiving device 220 to enter the non-detection mode.

In the optical sending device 210, the detection sequence generation unit is configured to generate a detection sequence, and the data signal generation unit is configured to generate a data signal. When the optical sending device 210 is in the detection mode, the transmitter modulates an optical signal by using the detection sequence generated by the detection sequence generation unit and the data signal generated by the data signal generation unit, and sends, over the optical fiber link 230, an optical signal that carries the detection sequence and the data signal. When the optical sending device 210 is in the non-detection mode, the transmitter modulates an optical signal by using the data signal generated by the data signal generation unit, and sends, over the optical fiber link 230, an optical signal that carries the data signal. In the optical receiving device 220, the receiver is configured to: receive an optical signal over the optical fiber link 230 and convert the optical signal into an analog electrical signal. The sampling and quantization unit is configured to sample and quantify the analog electrical signal to obtain a digital electrical signal. When the optical receiving device 220 is in the detection mode, the detection sequence demodulation unit demodulates the digital electrical signal to obtain a detection sequence, and determines the transmission performance of the optical fiber link 230 based on the detection sequence. The data signal demodulation unit demodulates the digital electrical signal to obtain a data signal. When the optical receiving device 220 is in the non-detection mode, the data signal demodulation unit demodulates the digital electrical signal to obtain a data signal.

In an example, both the optical sending device 210 and the optical receiving device 220 are in the detection mode. The transmitter modulates the optical signal by using the detection sequence generated by the detection sequence generation unit and the data signal generated by the data signal generation unit, to obtain the optical signal that carries the detection sequence and the data signal. The transmitter sends the optical signal over the optical fiber link 230. The receiver receives, over the optical fiber link 230, the optical signal that carries the detection sequence and the data signal, and the receiver converts the optical signal into an analog electrical signal. The sampling and quantization unit samples and quantifies the analog electrical signal to obtain a digital electrical signal. The detection sequence demodulation unit demodulates the digital electrical signal to obtain the detection sequence, and the detection sequence demodulation unit determines the transmission performance of the optical fiber link 230 based on the detection sequence. The data signal demodulation unit demodulates the digital electrical signal to obtain the data signal.

In another example, both the optical sending device 210 and the optical receiving device 220 are in the non-detection mode, the transmitter modulates the optical signal by using the data signal generated by the data signal generation unit, to obtain the optical signal that carries the data signal, and the transmitter sends the optical signal over the optical fiber link 230. The receiver receives the optical signal over the optical fiber link 230, and the receiver converts the optical signal into an analog electrical signal. The sampling and quantization unit samples and quantifies the analog electrical signal to obtain a digital electrical signal. The data signal demodulation unit demodulates the digital electrical signal to obtain the data signal.

It should be noted that the light source, the modulator, and the like in the embodiment shown in FIG. 3 may all be located in the transmitter of the optical sending device, and the filter in the embodiment shown in FIG. 3 may be located in the detection sequence demodulation unit of the optical receiving device. This is not limited in embodiments of this application.

The foregoing describes the method embodiments of this application. The following describes apparatus embodiments of this application. Apparatuses in this application are configured to perform the methods in this application. For details that are not disclosed in the apparatus embodiments, refer to the method embodiments.

FIG. 21 is a diagram of an apparatus 2100 for detecting an optical fiber link according to an embodiment of this application. The detection apparatus 2100 is used in an optical sending device. The detection apparatus 2100 may be the optical sending device or a functional component in the optical sending device. For example, the detection apparatus 2100 is the optical sending device, an optical module in the optical sending device, or an optical line card in the optical sending device. Alternatively, the detection apparatus 2100 is integrated into the optical sending device, an optical module in the optical sending device, or an optical line card in the optical sending device. The detection apparatus 2100 is configured to perform the steps performed by the optical sending device in the detection method provided in the embodiment shown in FIG. 3. For example, the optical sending device is the optical sending device 210 in the application scenario shown in FIG. 2. Refer to FIG. 21. The detection apparatus 2100 includes a generation module 2110 and a sending module 2120.

The generation module 2110 is configured to generate a first optical signal, where the first optical signal carries a detection sequence, and the detection sequence is used by an optical receiving device to detect transmission performance of the optical fiber link; and the sending module 2120 is configured to send the first optical signal over the optical fiber link, where the first optical signal, through transmission over the optical fiber link, forms a second optical signal, which includes the first optical signal and a reflected optical signal. For function implementation of the generation module 2110, refer to the related descriptions in S301. For function implementation of the sending module 2120, refer to the related descriptions in S302.

Optionally, an autocorrelation curve corresponding to the detection sequence satisfies a preset condition.

Optionally, that the autocorrelation curve corresponding to the detection sequence satisfies the preset condition includes: The autocorrelation curve corresponding to the detection sequence has one characteristic peak.

Optionally, the detection sequence includes a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

Optionally, the first optical signal carries a plurality of detection sequences, and the plurality of detection sequences are periodically distributed; and there is a boundary marker between adjacent detection sequences in the plurality of detection sequences; or adjacent detection sequences in the plurality of detection sequences are contiguous.

Optionally, the detection sequence includes either of the following: a pseudo random binary sequence and a Golay complementary sequence.

Optionally, the first optical signal further carries a data signal.

Optionally, in the first optical signal, a modulation depth of the detection sequence is less than a modulation depth of the data signal, and a baud rate of the detection sequence is less than a baud rate of the data signal.

Optionally, in the first optical signal, a ratio of the modulation depth of the detection sequence to the modulation depth of the data signal is less than a preset ratio; and a difference between the baud rate of the detection sequence and the baud rate of the data signal is within a preset range.

Optionally, the generation module 2110 is configured to modulate, by using the detection sequence, a drive signal of a light source, to cause the light source to emit the first optical signal.

Optionally, the generation module 2110 is configured to modulate, by using the detection sequence, an optical signal emitted by a light source, to obtain the first optical signal.

Optionally, the generation module 2110 is configured to modulate, by using a data signal modulated with the detection sequence, a drive signal of a light source, to cause the light source to emit the first optical signal.

In conclusion, according to the technical solution provided in this embodiment of this application, the optical sending device sends, over the optical fiber link, the optical signal that carries the detection sequence, so that the optical receiving device determines the transmission performance of the optical fiber link based on the detection sequence carried in the optical signal received over the optical fiber link, thereby detecting the optical fiber link. It can be learned that this embodiment of this application provides a transmissive detection solution. The existing optical sending device and optical receiving device in an optical fiber communication system are leveraged to detect the transmission performance of the optical fiber link, eliminating the need for additional devices such as OTDRs. Therefore, hardware implementation for optical fiber link detection is simplified and detection costs are reduced. In addition, fault diagnosis can be implemented. During fault diagnosis, it is unnecessary for a staff member to carry an instrument to a site for diagnosis, or perform optical fiber plugging and unplugging, thereby simplifying an implementation process, and implementing in-line detection.

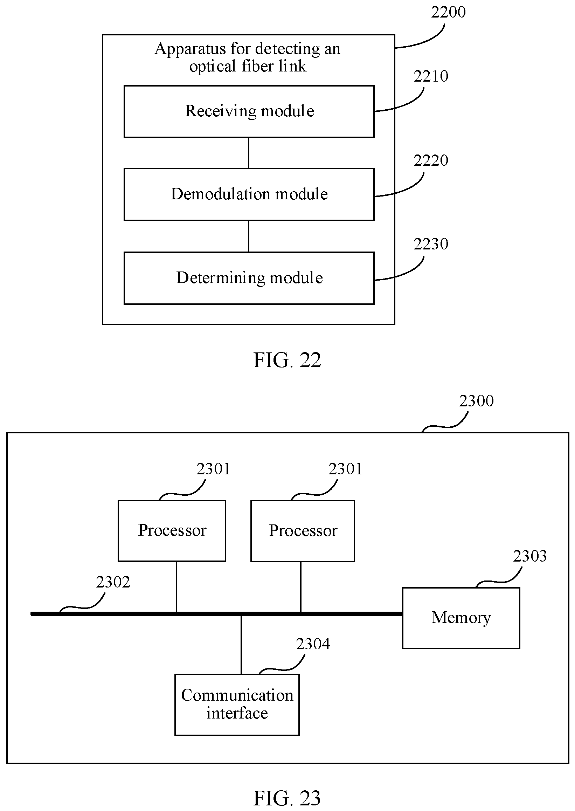

FIG. 22 is a diagram of another apparatus 2200 for detecting an optical fiber link according to an embodiment of this application. The detection apparatus 2200 is used in an optical receiving device. The detection apparatus 2200 may be the optical receiving device or a functional component in the optical receiving device. For example, the detection apparatus 2200 is the optical receiving device, an optical module in the optical receiving device, or an optical line card in the optical receiving device, or the detection apparatus 2200 is integrated into the optical receiving device, an optical module in the optical receiving device, or an optical line card in the optical receiving device. The detection apparatus 2200 is configured to perform the steps performed by the optical receiving device in the detection method provided in the embodiment shown in FIG. 3. For example, the optical receiving device is the optical receiving device 220 in the application scenario shown in FIG. 2. Refer to FIG. 22. The detection apparatus 2200 includes a receiving module 2210, a demodulation module 2220, and a determining module 2230.

The receiving module 2210 is configured to receive a second optical signal over the optical fiber link, where the second optical signal includes a first optical signal and a reflected optical signal, the first optical signal is an optical signal generated by an optical sending device, and the first optical signal carries a detection sequence; the demodulation module 2220 is configured to demodulate the second optical signal to obtain the detection sequence; and the determining module 2230 is configured to determine, based on the detection sequence obtained through demodulation, transmission performance of the optical fiber link.

For function implementation of the receiving module 2210, refer to the related descriptions in S303. For function implementation of the demodulation module 2220, refer to the related descriptions in S304. For function implementation of the determining module 2230, refer to the related descriptions in S305.

Optionally, an autocorrelation curve corresponding to the detection sequence satisfies a preset condition.

Optionally, that the autocorrelation curve corresponding to the detection sequence satisfies the preset condition includes: The autocorrelation curve corresponding to the detection sequence has one characteristic peak.

Optionally, the detection sequence includes a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

Optionally, the first optical signal carries a plurality of detection sequences, and the plurality of detection sequences are periodically distributed; and there is a boundary marker between adjacent detection sequences in the plurality of detection sequences; or adjacent detection sequences in the plurality of detection sequences are contiguous.

Optionally, the first optical signal carries a plurality of detection sequences, and there is a boundary marker between adjacent detection sequences in the plurality of detection sequences; and the demodulation module 2220 is configured to determine, based on the boundary marker carried in the second optical signal, the plurality of detection sequences carried in the second optical signal.

Optionally, the first optical signal carries a plurality of detection sequences, and adjacent detection sequences in the plurality of detection sequences are contiguous; and the demodulation module 2220 is configured to determine, based on a characteristic of the detection sequence, the plurality of detection sequences carried in the second optical signal.

Optionally, the determining module 2230 is configured to: obtain a correlation curve corresponding to the detection sequence obtained through demodulation, where the correlation curve is an autocorrelation curve or a cross-correlation curve, and the cross-correlation curve is determined based on the detection sequence obtained through demodulation and a pre-obtained detection sequence; and determine the transmission performance of the optical fiber link based on a characteristic peak on the correlation curve corresponding to the detection sequence obtained through demodulation.

Optionally, the determining module 2230 is configured to: when the correlation curve corresponding to the detection sequence obtained through demodulation has only one characteristic peak, determine that the optical fiber link is not faulty; or when the correlation curve corresponding to the detection sequence obtained through demodulation has a plurality of characteristic peaks, determine that the optical fiber link is faulty.

Optionally, the determining module 2230 is further configured to: when the correlation curve corresponding to the detection sequence obtained through demodulation has the plurality of characteristic peaks, determine a fault point on the optical fiber link based on a main peak and a secondary peak among the plurality of characteristic peaks. The plurality of characteristic peaks include one main peak and at least one secondary peak, and a peak value of the at least one secondary peak is less than a peak value of the main peak.

Optionally, the detection sequence includes either of the following: a pseudo random binary sequence and a Golay complementary sequence.

Optionally, the first optical signal further carries a data signal. That is, the first optical signal carries the detection sequence and the data signal.

Optionally, in the first optical signal, a modulation depth of the detection sequence is less than a modulation depth of the data signal, and a baud rate of the detection sequence is less than a baud rate of the data signal.

Optionally, in the first optical signal, a ratio of the modulation depth of the detection sequence to the modulation depth of the data signal is less than a preset ratio; and a difference between the baud rate of the detection sequence and the baud rate of the data signal is within a preset range.

Optionally, the demodulation module 2220 is configured to filter the second optical signal.

In conclusion, according to the technical solution provided in this embodiment of this application, the optical sending device sends, over the optical fiber link, the optical signal that carries the detection sequence, and the optical receiving device determines the transmission performance of the optical fiber link based on the detection sequence carried in the optical signal received over the optical fiber link, thereby detecting the optical fiber link. It can be learned that this embodiment of this application provides a transmissive detection solution. The existing optical sending device and optical receiving device in an optical fiber communication system are leveraged to detect the transmission performance of the optical fiber link, eliminating the need for additional devices such as OTDRs. Therefore, hardware implementation for optical fiber link detection is simplified and detection costs are reduced. In addition, fault diagnosis can be implemented. During fault diagnosis, it is unnecessary for a staff member to carry an instrument to a site for diagnosis, or perform optical fiber plugging and unplugging, thereby simplifying an implementation process, and implementing in-line detection.

It should be understood that the apparatus for detecting the optical fiber link provided in embodiments of this application may further be implemented by using an application-specific integrated circuit (application-specific integrated circuit, ASIC) or a programmable logic device (programmable logic device, PLD). The PLD may be a complex programmable logical device (complex programmable logical device, CPLD), a field programmable gate array (field programmable gate array, FPGA), generic array logic (generic array logic, GAL), or any combination thereof. Alternatively, the methods for detecting the optical fiber link provided in the foregoing method embodiments may be implemented by using software. When the methods for detecting the optical fiber link provided in the foregoing method embodiments are implemented by using the software, the modules in the apparatus for detecting the optical fiber link may alternatively be software modules.

Embodiments of this application provide an apparatus for detecting an optical fiber link. The detection apparatus includes a memory and a processor. The memory is configured to store a computer program. The processor is configured to execute the computer program stored in the memory, so that the detection apparatus performs all or some of the steps in the method for detecting the optical fiber link provided in the embodiment shown in FIG. 3, where for example, the detection apparatus performs S304, S305, and other steps in the method for detecting the optical fiber link provided in the embodiment shown in FIG. 3. The detection apparatus may be an optical sending device, an optical module in the optical sending device, an optical line card in the optical sending device, an optical receiving device, an optical module in the optical receiving device, an optical line card in the optical receiving device, or the like. The optical sending device may be a network device, a terminal device, or a server, and the optical receiving device may also be a network device, a terminal device, or a server.

In an embodiment, FIG. 23 is a diagram of still another apparatus 2300 for detecting an optical fiber link according to an embodiment of this application. The detection apparatus 2300 may be a network device, a terminal device, or a server. The detection apparatus 2300 includes at least one processor 2301 (two processors 2301 are used as an example for description in FIG. 23), a communication bus 2302, a memory 2303, and at least one communication interface 2304. The at least one processor 2301, the memory 2303, and the at least one communication interface 2304 are connected through the communication bus 2302. The at least one processor 2301, the memory 2303, and the at least one communication interface 2304 may also be connected in a connection manner other than the communication bus 2302.

The memory 2303 is configured to store a computer program for executing the technical solutions in this application, and the processor 2301 controls the execution. The computer program stored in the memory 2303 includes but is not limited to program code, program instructions, data, and the like. The memory 2303 may be a read-only memory (read-only memory, ROM) or another type of static storage device that can store static information and instructions, a random access memory (random access memory, RAM) or another type of dynamic storage device that can store information and instructions, a non-volatile random access memory (non-volatile random access memory, NVRAM), a programmable read-only memory (programmable read-only memory, PROM), an erasable programmable read-only memory (erasable programmable read-only memory, EPROM), an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be for carrying or storing expected program code in a form of instructions or a data structure and that is accessible to a computer, but is not limited thereto. The memory 2303 may exist independently, and is connected to the processor 2301 through the communication bus 2302. Alternatively, the memory 2303 may be integrated with the processor 2301. This is not limited in this embodiment of this application.

The processor 2301 may be a general-purpose processor or a dedicated processor. The general-purpose processor is a processor that performs a specific step and/or operation by reading and executing a computer program stored in a memory (for example, the memory 2303). In a process of performing the foregoing step and/or operation, the general-purpose processor may use the computer program stored in the memory (for example, the memory 2303). The stored computer program may be executed to implement related functions of the demodulation module 2220, the determining module 2230, and the like. The general-purpose processor is, for example, but not limited to, a central processing unit (central processing unit, CPU). The dedicated processor is a processor specially designed to perform a specific step and/or operation. The dedicated processor is, for example, but not limited to, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor 2301 may implement or execute various logical blocks, modules, and circuits described with reference to content disclosed in embodiments of this application. Alternatively, the processor 2301 may be a combination for implementing a computing function, for example, a combination of one or more microprocessors or a combination of a DSP and a microprocessor. The processor may be configured to: demodulate a second optical signal to obtain a detection sequence, and determine transmission performance of the optical fiber link based on the detection sequence.

The communication bus 2302 is configured to perform information transmission between the processor 2301, the communication interface 2304, and the memory 2303. The communication bus 2302 may be a peripheral component interconnect (peripheral component interconnect, PCI) bus, an extended industry standard architecture (extended industry standard architecture, EISA) bus, or the like. The communication bus 2302 may be classified as an address bus, a data bus, a control bus, or the like. For ease of representation, only one bold line is for representation in FIG. 23, but this does not mean that there is only one bus or only one type of bus.

The communication interface 2304 includes an input/output (input/output, I/O) interface, a physical interface, a logical interface, and other interfaces configured to implement interconnection between components inside the detection apparatus 2300 and interfaces configured to implement interconnection between the detection apparatus 2300 and another communication device. The physical interface may be an Ethernet (Ethernet) interface, a fast Ethernet (fast Ethernet, FE) interface, a gigabit Ethernet (gigabit Ethernet, GE) interface, a terabit Ethernet (Terabit Ethernet, TbE) interface, a 400GE interface, an asynchronous transfer mode (asynchronous transfer mode, ATM) interface, or the like, and is configured to implement interconnection between the detection apparatus 2300 and the another device. The logical interface is an interface inside the detection apparatus 2300, and is configured to implement interconnection between the components inside the detection apparatus 2300. It is easy to understand that the communication interface 2304 is used by the detection apparatus 2300 to communicate with the another device or a communication network. For example, the communication interface 2304 is used by the detection apparatus 2300 to send/receive optical signals to/ from the another device or the communication network. The communication interface 2304 may use an apparatus like any transceiver (for example, a transmitter or a receiver), and the communication network may be an Ethernet, an optical transport network (optical transport network, OTN), a secret private network (secret private network, SPN), a fiber channel (fiber channel), infiniband (infiniband), or the like.

During specific implementation, in an embodiment, the detection apparatus 2300 includes a plurality of processors 2301, and each of the plurality of processors 2301 may be a single-core (single-CPU) processor, or may be a multi-core (multi-CPU) processor. The processor herein may refer to one or more devices, circuits, and/or processing cores configured to process data (for example, computer program instructions).

In a specific embodiment, when the detection apparatus 2300 is an optical sending device, the communication interface 2304 in the detection apparatus 2300 is configured to send an optical signal that carries the detection sequence. When the detection apparatus 2300 is an optical receiving device, the communication interface 2304 in the detection apparatus 2300 is configured to receive an optical signal that carries the detection sequence. Correspondingly, the processor 2301 in the detection apparatus 2300 is configured to: demodulate the optical signal to obtain the detection sequence, and determine the transmission performance of the optical fiber link based on the detection sequence. For a detailed processing process of the processor 2301, refer to the related descriptions in the method embodiment shown in FIG. 3. Details are not described herein again.

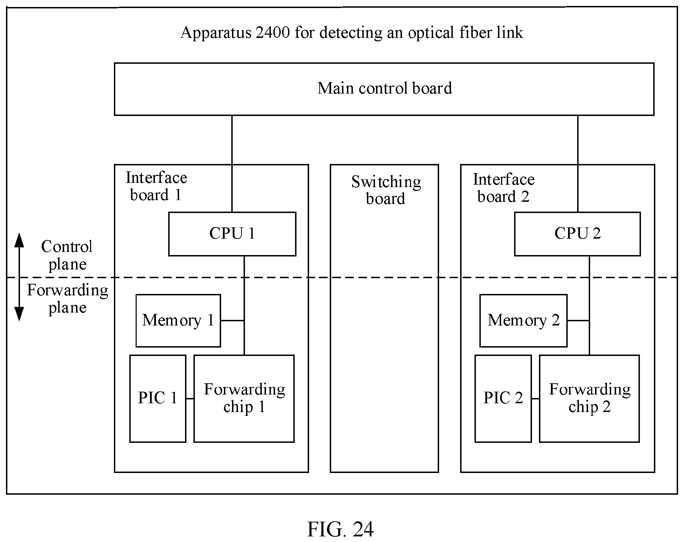

In another embodiment, FIG. 24 is a diagram of yet another apparatus 2400 for detecting an optical fiber link according to an embodiment of this application. The detection apparatus 2400 may be a network device, for example, a datacom device like a switch or a router. As shown in FIG. 24, the detection apparatus 2400 includes a main control board and one or more interface boards, and the main control board is communicatively connected to the interface board. The main control board is also referred to as a main processing unit (main processing unit, MPU) or a route processor card (route processor card). The main control board is responsible for controlling and managing components in the detection apparatus 2400, including route computation, and device management and maintenance functions. The interface board is also referred to as a line processing unit (line processing unit, LPU) or a line card (line card). The interface board is configured to forward data. In some embodiments, the detection apparatus 2400 may also include a switching board, the switching board is communicatively connected to the main control board and the interface board, the switching board is configured to forward data between the interface boards, and the switching board may also be referred to as a switch fabric unit (switch fabric unit, SFU). The interface board includes a central processing unit, a memory, a forwarding chip, and a physical interface card (physical interface card, PIC). The central processing unit is separately communicatively connected to the memory, the forwarding chip, and the physical interface card. The memory is configured to store a forwarding table. The forwarding chip is configured to forward a received data frame based on the forwarding table stored in the memory. If a destination address of the data frame is an address of the detection apparatus 2400, the data frame is sent to the CPU for processing. If a destination address of the data frame is not an address of the detection apparatus 2400, a next hop and an egress interface corresponding to the destination address are found in the forwarding table based on the destination address, and the data frame is forwarded to the egress interface corresponding to the destination address. The forwarding chip may be a network processor (network processor, NP). The PIC is also referred to as a subcard, may be mounted on the interface board, and is responsible for converting an optical or electrical signal into a data frame, checking validity of the data frame, and then forwarding the data frame to the forwarding chip for processing. In some embodiments, the central processing unit may alternatively perform a function of the forwarding chip, for example, implement software forwarding based on a general-purpose CPU, so that the interface board requires no forwarding chip. A communication connection between the main control board, the interface board, and the switching board may be implemented through a bus. The forwarding chip may be implemented via an ASIC or an FPGA.

Logically, the detection apparatus 2400 includes a control plane and a forwarding plane. The control plane includes the main control board and the central processing unit, and the forwarding plane includes components for performing forwarding, for example, the memory, the PIC, and the NP. The control plane performs functions of a router such as generating the forwarding table, processing signaling and protocol packets, and configuring and maintaining a status. The control plane delivers the generated forwarding table to the forwarding plane. On the forwarding plane, the NP searches the forwarding table delivered by the control plane to forward a packet received by the PIC of the detection apparatus 2400. The forwarding table delivered by the control plane may be stored in the memory. In some embodiments, the control plane and the forwarding plane may be completely separated, and are not on a same device.

In a specific embodiment, when the detection apparatus 2400 is an optical sending device, the interface board in the detection apparatus 2400 is configured to: generate an optical signal that carries a detection sequence, and send the optical signal. For a specific process, refer to the related descriptions in S301 and S302. When the detection apparatus 2400 is an optical receiving device, the interface board in the detection apparatus 2400 is configured to: receive an optical signal that carries a detection sequence, demodulate the optical signal to obtain the detection sequence, and determine transmission performance of the optical fiber link based on the detection sequence. For a specific process, refer to the related descriptions in S303 to S305. When the detection apparatus 2400 is the optical receiving device, the main control board may also be configured to determine the transmission performance of the optical fiber link based on the detection sequence. For a specific process, refer to the related descriptions in S305. Details are not described herein again.

In a possible implementation, an inter-process communication (inter-process communication, IPC) channel is established between the main control board and the interface board, and the main control board and the interface board communicate with each other through the IPC channel.

An embodiment of this application further provides an apparatus for detecting an optical fiber link, including a processor and an optical component. The optical component is configured to perform receiving and sending operations in the embodiment shown in FIG. 3. The processor is configured to perform an operation in the method embodiment shown in FIG. 3 other than the receiving and sending operations.

In an optional embodiment, the processor includes an optical digital signal processor (optical digital signal processor, ODSP), and the optical component includes at least one of an optical transmitter or an optical receiver.

In an optional embodiment, the detection apparatus is an optical module or an optical line card.

Based on a same inventive concept, an embodiment of this application provides an optical fiber communication system. The optical fiber communication system includes an optical sending device, an optical receiving device, and an optical fiber link. The optical sending device is connected to the optical receiving device over the optical fiber link. The optical sending device includes the apparatus for detecting the optical fiber link provided in FIG. 21, FIG. 23, or FIG. 24. The optical receiving device includes the apparatus for detecting the optical fiber link provided in any one of FIG. 22 to FIG. 24.

For example, the optical fiber communication system is shown in FIG. 1 or FIG. 2.

Based on a same inventive concept, an embodiment of this application provides a computer-readable storage medium. The computer-readable storage medium stores a computer program. When the computer program is executed (for example, executed by a network device, a terminal device, a server, an optical module, an optical line card, and/or the like), at least a part of the steps in the method embodiment shown in FIG. 3 are implemented. For example, steps S304 and S305 are implemented.

Based on a same inventive concept, an embodiment of this application provides a computer program product. The computer program product includes a program or code. When the program or the code is executed (for example, executed by a network device, a terminal device, a server, an optical module, an optical line card, and/or the like), at least a part of the steps in the method embodiment shown in FIG. 3 are implemented. For example, steps S304 and S305 are implemented.

Based on a same inventive concept, an embodiment of this application provides a chip. The chip includes a programmable logic circuit and/or program instructions. When the chip is run, the chip is configured to implement at least a part of the steps in the method embodiment shown in FIG. 3. For example, steps S304 and S305 are implemented.

All or some of the foregoing embodiments may be implemented by using software, hardware, firmware, or any combination thereof. When embodiments are implemented by using the software, all or some of embodiments can be implemented in a form of a computer program product. The computer program product includes one or more computer instructions. When the computer program instructions are loaded and executed on a computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that, in this application, the term "at least one" means one or more, and the term "a plurality of" means two or more than two. In this application, unless otherwise specified, the symbol "/" usually represents "or". For example, A/B represents A or B. The term "and/or" in this application describes only an association relationship between associated objects, and represents that three relationships may exist. For example, A and/or B may represent the following three cases: Only A exists, both A and B exist, and only B exists. In addition, for ease of clear description, in this application, the terms such as "first", "second", and "third" are used to distinguish between same items or similar items whose functions and purposes are basically the same. A person skilled in the art may understand that the terms such as "first", "second", and "third" do not limit a quantity and an execution sequence.

Different types of embodiments such as the method embodiments and the apparatus embodiments provided in embodiments of this application may be mutually referenced. A sequence of the operations in the method embodiments can be appropriately adjusted, and the operations can also be correspondingly added or deleted based on a case. Any varied method readily figured out by a person skilled in the art within the technical scope disclosed in this application shall fall within the protection scope of this application. Therefore, details are not described again.

In the corresponding embodiments provided in this application, it should be understood that the disclosed apparatuses and the like may be implemented in other composition manners. For example, the foregoing apparatus embodiments are merely examples. For example, the division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical or other forms. The modules described as separate parts may or may not be physically separate, and the parts described as modules may or may not be physical modules, and may be located at one position, or may be distributed on a plurality of network nodes. Some or all the modules may be selected based on actual requirements to achieve the objectives of the solutions in embodiments.

The foregoing descriptions are merely example implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for detecting an optical fiber link, applied to an optical sending device, wherein the method comprises:
generating a first optical signal, wherein the first optical signal carries a detection sequence, and the detection sequence is used by an optical receiving device to detect transmission performance of the optical fiber link; and
sending the first optical signal over the optical fiber link, wherein the first optical signal, through transmission over the optical fiber link between the optical sending device and the optical receiving device, forms a second optical signal, and the second optical signal comprises the first optical signal and a reflected optical signal.

2. The method according to claim 1, wherein an autocorrelation curve corresponding to the detection sequence satisfies a preset condition.

3. The method according to claim 2, wherein that the autocorrelation curve corresponding to the detection sequence satisfies the preset condition comprises: the autocorrelation curve corresponding to the detection sequence has one characteristic peak.

4. The method according to claim 2 or 3, wherein the detection sequence comprises a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

5. The method according to any one of claims 1 to 4, wherein
the first optical signal carries a plurality of detection sequences, and the plurality of detection sequences are periodically distributed; and
there is a boundary marker between adjacent detection sequences in the plurality of detection sequences; or
adjacent detection sequences in the plurality of detection sequences are contiguous.

6. The method according to any one of claims 1 to 5, wherein the first optical signal further carries a data signal.

7. The method according to claim 6, wherein in the first optical signal, a modulation depth of the detection sequence is less than a modulation depth of the data signal, and a baud rate of the detection sequence is less than a baud rate of the data signal.

8. The method according to any one of claims 1 to 7, wherein the generating the first optical signal comprises:
modulating, by using the detection sequence, a drive signal of a light source, to cause the light source to emit the first optical signal;
modulating, by using the detection sequence, an optical signal emitted by a light source, to obtain the first optical signal; or
modulating, by using a data signal modulated with the detection sequence, a drive signal of a light source, to cause the light source to emit the first optical signal.

9. A method for detecting an optical fiber link, applied to an optical receiving device, wherein the method comprises:
receiving a second optical signal over the optical fiber link, wherein the second optical signal comprises a first optical signal and a reflected optical signal, the first optical signal is an optical signal generated by an optical sending device, and the first optical signal carries a detection sequence;
demodulating the second optical signal to obtain the detection sequence; and
determining, based on the detection sequence obtained through demodulation, transmission performance of the optical fiber link.

10. The method according to claim 9, wherein an autocorrelation curve corresponding to the detection sequence satisfies a preset condition.

11. The method according to claim 10, wherein that the autocorrelation curve corresponding to the detection sequence satisfies the preset condition comprises: the autocorrelation curve corresponding to the detection sequence has one characteristic peak.

12. The method according to claim 10 or 11, wherein the detection sequence comprises a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

13. The method according to any one of claims 9 to 12, wherein the first optical signal carries a plurality of detection sequences, and there is a boundary marker between adjacent detection sequences in the plurality of detection sequences; and
the demodulating the second optical signal to obtain the detection sequence comprises:
determining, based on the boundary marker carried in the second optical signal, the plurality of detection sequences carried in the second optical signal.

14. The method according to any one of claims 9 to 12, wherein the first optical signal carries a plurality of detection sequences, and adjacent detection sequences in the plurality of detection sequences are contiguous; and
the demodulating the second optical signal to obtain the detection sequence comprises:
determining, based on a characteristic of the detection sequence, the plurality of detection sequences carried in the second optical signal.

15. The method according to any one of claims 9 to 14, wherein
the determining, based on the detection sequence obtained through demodulation, the transmission performance of the optical fiber link comprises:
obtaining a correlation curve corresponding to the detection sequence obtained through demodulation, wherein the correlation curve is an autocorrelation curve or a cross-correlation curve, and the cross-correlation curve is determined based on the detection sequence obtained through demodulation and the pre-obtained detection sequence; and
determining the transmission performance of the optical fiber link based on a characteristic peak on the correlation curve corresponding to the detection sequence obtained through demodulation.

16. The method according to claim 15, wherein
the determining the transmission performance of the optical fiber link based on the characteristic peak on the correlation curve corresponding to the detection sequence obtained through demodulation comprises:
when the correlation curve corresponding to the detection sequence obtained through demodulation has only one characteristic peak, determining that the optical fiber link is not faulty; or
when the correlation curve corresponding to the detection sequence obtained through demodulation has a plurality of characteristic peaks, determining that the optical fiber link is faulty.

17. The method according to claim 16, wherein
the determining the transmission performance of the optical fiber link based on the characteristic peak on the correlation curve corresponding to the detection sequence obtained through demodulation further comprises:
when the correlation curve corresponding to the detection sequence obtained through demodulation has the plurality of characteristic peaks, determining a fault point on the optical fiber link based on a main peak and a secondary peak among the plurality of characteristic peaks.

18. The method according to any one of claims 9 to 17, wherein the first optical signal further carries a data signal.

19. The method according to claim 18, wherein in the first optical signal, a modulation depth of the detection sequence is less than a modulation depth of the data signal, and a baud rate of the detection sequence is less than a baud rate of the data signal.

20. The method according to any one of claims 9 to 19, wherein
the demodulating the second optical signal comprises: filtering the second optical signal.

21. An apparatus for detecting an optical fiber link, used in an optical sending device, wherein the apparatus comprises:
a generation module, configured to generate a first optical signal, wherein the first optical signal carries a detection sequence, and the detection sequence is used by an optical receiving device to detect transmission performance of the optical fiber link; and
a sending module, configured to send the first optical signal over the optical fiber link, wherein the first optical signal, through transmission over the optical fiber link between the optical sending device and the optical receiving device, forms a second optical signal, and the second optical signal comprises the first optical signal and a reflected optical signal.

22. The apparatus according to claim 21, wherein an autocorrelation curve corresponding to the detection sequence satisfies a preset condition.

23. The apparatus according to claim 22, wherein that the autocorrelation curve corresponding to the detection sequence satisfies the preset condition comprises: the autocorrelation curve corresponding to the detection sequence has one characteristic peak.

24. The apparatus according to claim 22 or 23, wherein the detection sequence comprises a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

25. The apparatus according to any one of claims 21 to 24, wherein
the first optical signal carries a plurality of detection sequences, and the plurality of detection sequences are periodically distributed; and
there is a boundary marker between adjacent detection sequences in the plurality of detection sequences; or
adjacent detection sequences in the plurality of detection sequences are contiguous.

26. The apparatus according to any one of claims 21 to 25, wherein the first optical signal further carries a data signal.

27. The apparatus according to claim 26, wherein in the first optical signal, a modulation depth of the detection sequence is less than a modulation depth of the data signal, and a baud rate of the detection sequence is less than a baud rate of the data signal.

28. The apparatus according to any one of claims 21 to 27, wherein the generation module is configured to:
modulate, by using the detection sequence, a drive signal of a light source, to cause the light source to emit the first optical signal;
modulate, by using the detection sequence, an optical signal emitted by a light source, to obtain the first optical signal; or
modulate, by using a data signal modulated with the detection sequence, a drive signal of a light source, to cause the light source to emit the first optical signal.

29. An apparatus for detecting an optical fiber link, used in an optical receiving device, wherein the apparatus comprises:
a receiving module, configured to receive a second optical signal over the optical fiber link, wherein the second optical signal comprises a first optical signal and a reflected optical signal, the first optical signal is an optical signal generated by an optical sending device, and the first optical signal carries a detection sequence;
a demodulation module, configured to demodulate the second optical signal to obtain the detection sequence; and
a determining module, configured to determine, based on the detection sequence obtained through demodulation, transmission performance of the optical fiber link.

30. The apparatus according to claim 29, wherein an autocorrelation curve corresponding to the detection sequence satisfies a preset condition.

31. The apparatus according to claim 30, wherein that the autocorrelation curve corresponding to the detection sequence satisfies the preset condition comprises: the autocorrelation curve corresponding to the detection sequence has one characteristic peak.

32. The apparatus according to claim 30 or 31, wherein the detection sequence comprises a first sequence and a second sequence, the autocorrelation curve corresponding to the detection sequence is determined based on an autocorrelation curve of the first sequence and an autocorrelation curve of the second sequence, and an autocorrelation value at each point on the autocorrelation curve corresponding to the detection sequence is equal to a sum of an autocorrelation value at the point on the autocorrelation curve of the first sequence and an autocorrelation value at the point on the autocorrelation curve of the second sequence.

33. The apparatus according to any one of claims 29 to 32, wherein the first optical signal carries a plurality of detection sequences, and there is a boundary marker between adjacent detection sequences in the plurality of detection sequences; and the demodulation module is configured to determine, based on the boundary marker carried in the second optical signal, the plurality of detection sequences carried in the second optical signal.

34. The apparatus according to any one of claims 29 to 32, wherein the first optical signal carries a plurality of detection sequences, and adjacent detection sequences in the plurality of detection sequences are contiguous; and the demodulation module is configured to determine, based on a characteristic of the detection sequence, the plurality of detection sequences carried in the second optical signal.

35. The apparatus according to any one of claims 29 to 34, wherein the determining module is configured to:
obtain a correlation curve corresponding to the detection sequence obtained through demodulation, wherein the correlation curve is an autocorrelation curve or a cross-correlation curve, and the cross-correlation curve is determined based on the detection sequence obtained through demodulation and the pre-obtained detection sequence; and
determine the transmission performance of the optical fiber link based on a characteristic peak on the correlation curve corresponding to the detection sequence obtained through demodulation.

36. The apparatus according to claim 35, wherein the determining module is configured to:
when the correlation curve corresponding to the detection sequence obtained through demodulation has only one characteristic peak, determine that the optical fiber link is not faulty; or
when the correlation curve corresponding to the detection sequence obtained through demodulation has a plurality of characteristic peaks, determine that the optical fiber link is faulty.

37. The apparatus according to claim 36, wherein
the determining module is further configured to: when the correlation curve corresponding to the detection sequence obtained through demodulation has the plurality of characteristic peaks, determine a fault point on the optical fiber link based on a main peak and a secondary peak among the plurality of characteristic peaks.

38. The apparatus according to any one of claims 29 to 37, wherein the first optical signal further carries a data signal.

39. The apparatus according to claim 38, wherein in the first optical signal, a modulation depth of the detection sequence is less than a modulation depth of the data signal, and a baud rate of the detection sequence is less than a baud rate of the data signal.

40. The apparatus according to any one of claims 29 to 39, wherein
the demodulation module is configured to filter the second optical signal.

41. An apparatus for detecting an optical fiber link, comprising a memory and a processor, wherein
the memory is configured to store a computer program, and the processor is configured to execute the computer program stored in the memory, to cause the detection apparatus to perform at least a part of the steps in the method according to any one of claims 1 to 20.

42. An apparatus for detecting an optical fiber link, comprising a processor and an optical component, wherein
the optical component is configured to perform receiving and sending operations in the method according to any one of claims 1 to 20; and
the processor is configured to perform an operation in the method according to any one of claims 1 to 25 other than the receiving and sending operations.

43. The apparatus according to claim 42, wherein
the processor comprises an optical digital signal processor ODSP; and
the optical component comprises at least one of an optical transmitter or an optical receiver.

44. The apparatus according to claim 42 or 43, wherein
the detection apparatus is an optical module or an optical line card.

45. An optical fiber communication system, comprising an optical sending device, an optical receiving device, and an optical fiber link, wherein the optical sending device is connected to the optical receiving device over the optical fiber link, the optical sending device comprises the detection apparatus according to any one of claims 21 to 28 and 41 to 44, and the optical receiving device comprises the detection apparatus according to any one of claims 29 to 44.

46. A computer-readable storage medium, wherein the computer-readable storage medium stores a computer program; and when the computer program is executed, at least a part of the steps in the method according to any one of claims 1 to 20 are implemented.

47. A computer program product, wherein the computer program product comprises a program or code; and when the program or the code is executed, at least a part of the steps in the method according to any one of claims 1 to 20 are implemented.
